# EUROPÄISCHE PATENTSCHRIFT

(11) **EP 1 950 022 B1**
(45) Veröffentlichungstag und Bekanntmachung des Hinweises auf die Patenterteilung: **26.05.2010**
(21) Anmeldenummer: 08001143.0
(22) Anmeldetag: 22.01.2008
(51) Int. Cl.: B29C 33/46, B29C 45/76, A01J 5/04

(54) **Verfahren und Vorrichtung zur Herstellung einer Vorform eines Zitzengummis**
Method and device for manufacturing a rubber teat
Procédé et dispositif de fabrication d'un manchon trayeur en caoutchouc

(30) Priorität: 24.01.2007 DE 102007003480
(43) Veröffentlichungstag der Anmeldung: 30.07.2008
(73) Patentinhaber: Hatzack, Wilfried, 86842 Türkheim (DE); Maier, Jakob, 86842 Türkheim (DE)
(72) Erfinder: Hatzack, Wilfried, 86842 Türkheim (DE); Maier, Jakob, 86842 Türkheim (DE)
(74) Vertreter: Grünecker, Kinkeldey, Stockmair & Schwanhäusser Anwaltssozietät

(56) Entgegenhaltungen:
- WO-A-98/50213
- WO-A-99/34664
- JP-A- 61 262 112
- JP-A- 63 296 917

## Beschreibung

Die vorliegende Erfindung betrifft im Allgemeinen den Bereich des maschinellen Melkens von Milchtieren und betrifft insbesondere die Herstellung von Zitzengummis, die beim automatischen oder halbautomatischen Melkvorgang an die Zitzen der Tiere anzulegen sind.

In der modernen Agrarwirtschaft besteht ein hoher Konkurrenzdruck, der durch die fortschreitende Globalisierung noch weiter verstärkt wird. Insbesondere in der Milchwirtschaft muss daher auf eine hohe Rentabilität bei der Erzeugung der Milch geachtet werden. Dazu ist es jedoch von großer Wichtigkeit, einen gewissen Automatisierungsgrad bei der Erzeugung der Milch anzustreben, um damit einen großen Tierbestand mit einem vertretbaren personellen Aufwand versorgen zu können, wobei aber auch die Qualität der ermolkenen Milch einen hohen Standard aufweisen muss. Ferner gilt es auch, entsprechende nationale und internationale Bestimmungen hinsichtlich der Qualität der Milch sorgfältig einzuhalten. Ein sehr wichtiger Aspekt zum Erhalten eines dauerhaft hohen Milchertrags liegt darin, die Tiergesundheit in einer Herde auf einem hohen Niveau zu halten, so dass langfristig von jedem einzelnen Tier ein möglichst hoher Milchertrag zu erwirtschaften ist.

Während der zunehmenden Automatisierung bei der Versorgung einer großen Anzahl von Milchtieren haben sich in der Vergangenheit gewisse Melkverfahren durchgesetzt, die es zum Ziel haben, einerseits eine große Anzahl an Tieren bei geringem personellen Aufwand versorgen und damit auch Melken zu können und andererseits für die Tiere ein möglichst optimales Umfeld zu schaffen, um damit langfristig die Tiergesundheit zu bewahren. Zu diesem Zweck werden in vielen großen Agrarbetrieben sogenannte Melkroboter eingesetzt, in der beispielsweise der Melkvorgang nahezu vollautomatisiert abläuft, so dass in der Regel mehr als zwei Melkvorgänge pro Tag an einem einzelnen Tier bei geringem personellen Aufwand durchgeführt werden können. In anderen Betrieben wird eine semiautomatische Melkstrategie angewendet, in der sogenannte Melkstände eingerichtet werden, in der gewisse Tätigkeiten von dem Personal ausgeführt oder zumindest überwacht werden und lediglich der Melkvorgang selbst nahezu vollautomatisch abläuft. Der Melkvorgang selbst wird je nach Verfahrensstrategie in der Regel so ausgeführt, dass nach einer gewissen Stimulationsphase ein Unterdruck an der jeweiligen Zitze erzeugt wird, so dass es zu einem Milchfluss kommt, wobei typischerweise regelmäßig eine den Melkfluss unterbrechende Massageaktion ausgeführt wird. Dazu wird die Zitze regelmäßig mit von außen zugeführten Druck beaufschlagt, so dass ein gewisser Rückfluss an Blut und Lymphflüssigkeiten während dieser Phase stattfindet und auch entsprechende Druckverhältnisse an der Zitze hervorgerufen werden, die zumindest grob dem natürlichen Saugverhalten eines Kalbes nachgebildet sind. Die Melkfunktion, sowie teilweise oder vollständig die Funktion der Stimulation vor, während und nach dem eigentlichen Melkvorgang werden dabei mittels eines Melkgeschirrs, das entsprechende Melkbecher aufweist, mit Unterstützung einer Fachkraft oder auch vollständig automatisch in gesteuerter Weise ausgeführt. Die einzelnen Melkbecher sind in der Regel als starre Becher aufgebaut, die an der Innenseite mit einem elastischen Material, dem sogenannten Zitzengummi, ausgekleidet sind. Der Zitzengummi ist somit in direktem Kontakt mit der Zitze des Tieres und stellt damit gewissermaßen eine "Schnittstelle" zwischen Tier und Maschine dar. Daher muss der Zitzengummi eine Reihe von Eigenschaften aufweisen, um damit die beim automatisierten Melken auftretenden Anforderungen zu erfüllen. D. h., der Zitzengummi muss es zunächst ermöglichen, dass entsprechende Druckverhältnisse unter der Zitze erreicht werden können, um damit den gewünschten Milchfluss einzuleiten. Somit muss der Zitzengummi zum einen auf die Zitze aufschiebbar sein und muss dennoch eine ausreichend hohe Dichtigkeit am Zitzengrund erzeugen, um damit das Erzeugen des gewünschten Unterdruckes zu ermöglichen.

Des weiteren muss bei der gewünschten periodischen Unterbrechung des Milchflusses und der damit verbundenen Massagewirkung eine ausreichend hohe Elastizität vorhanden sein, um ein Einfallen bzw. Zusammenfalten des Zitzengummis unterhalb der Zitze zu ermöglichen, wobei dies durch Beaufschlagen des Zitzengummis an der Außenseite mit (Druck-)Luft erfolgt. In der Regel werden hierbei Frequenzen von etwa 0,2 bis 2 Hz erreicht, so dass das entsprechende Material des Zitzengummis über seine Lebensdauer hinweg eine Vielzahl entsprechender Einfaltvorgänge mit nahezu gleichem Verhalten ausführen soll. Des weiteren soll der Zitzengummi insgesamt ein gutes Reinigungsverhalten aufweisen, da eine entsprechende Keimbildung möglichst zu unterdrücken ist, um damit das Übertragen von Bakterien von einem Tier zum anderen weitestgehend zu vermeiden. Ferner soll das Material chemisch möglichst inert sein, so dass keine entsprechenden Absonderungen in die Milch übergehen, um damit den hohen hygienischen und qualitativen Standardwerten zu entsprechen.

Auf Grund der vielen Eigenschaften, die von einem Zitzengummi zu erfüllen sind, werden eine Reihe von Materialmischungen aktuell verwendet, wobei in der Regel entsprechende Polymermaterialien eingesetzt werden, um Zitzengummis herzustellen. Die diversen Materialien können daher sehr unterschiedliche Ergebnisse im Hinblick auf Haltbarkeit, Wirksamkeit im Hinblick auf hohe Ausbeute und insbesondere auf die Tiergesundheit zeigen. Insbesondere in Bezug auf die zuletzt genannten Aspekte hat es sich gezeigt, dass die Konsistenz und die Materialeigenschaften wichtige Eigenschaften sind, um die Effizienz des Melkvorgangs zu steigern. So sind beispielsweise relativ weiche Materialien, beispielsweise Silikonmischungen, für eine hohe Ausbeute und Milchgesundheit vorteilhaft, da somit ein für das Tier angenehmer Kontaktbereich oder eine "Schnittstelle" zwischen Tier und Maschine beim Melkvorgang geschaffen werden kann, so dass eine entsprechende mechanische Belastung und damit eine einhergehende Verhärtung und krankhafte Änderung der Zitze deutlich unterdrückt werden kann im Gegensatz zu relativ harten-Gummimischungen.

Auf Grund der vielen unterschiedlichen Anforderungen, die ein Zitzengummi zu erfüllen hat, sind diese im Einsatz relativ häufig auszuwechseln, so dass effiziente Herstellungsverfahren erforderlich sind, in denen die Zitzengummis effizient in hoher Zahl und mit gleichbleibend hoher Qualität hergestellt werden können. In der Regel werden die Zitzengummis aus einer Polymermaterialmischung unter Druck und Wärme auf der Grundlage einer entsprechenden Form durch ein Spritzgussverfahren hergestellt. Bei diesem Fertigungsvorgang wird die entsprechende Materialmischung erhitzt und damit zähflüssig gemacht, und unter einem relativ hohen Druck in eine entsprechende Form eingespritzt, in der sich dann nach einer gewissen Aushärtzeit eine entsprechende Vorform des Zitzengummis ausbildet, die dann aus der Form entnommen und in geeigneter Weise nachbehandelt wird, um damit den endgültigen Zustand des Zitzengummis zu erhalten. Um eine entsprechend effiziente Herstellung der Zitzengummis zu erreichen, werden häufig Materialmischungen verwendet, die einen effizienten Herstellungsvorgang ermöglichen, insbesondere während der Entnahme der noch heißen Vorform, wobei in der Regel härtere Materialmischungen eine bessere Handhabung ermöglichen, da diese eine höhere mechanische Stabilität zeigen. Bei der Bearbeitung von Materialmischungen, die zu einem relativ weichen Zitzengummi führen, beispielsweise Silikon-Zitzengummis, ist die Entnahme bzw. das Abziehen der Vorform des Zitzengummis von entsprechenden Teilen der Spritzgussform ein kritischer Vorgang, da eine zu große mechanische Belastung oder eine andere Art an zu großer Deformation zu einer irreversiblen Veränderung des Materials der Vorform führen kann und damit den Zitzengummi unbrauchbar macht. Um somit eine breite Palette an unterschiedlichem Materialmischungen und insbesondere weiche Materialmischungen, die bei der Anwendung der Zitzengummis Vorteile besitzen können, während der Herstellung effizient bearbeiten zu können, sind somit geeignete Maßnahmen erforderlich, um entsprechende irreversible Veränderungen des Zitzengummimaterials nach dem Spritzgussverfahren und vor der Endbehandlung möglichst zu vermeiden.

Die WO 99/34664 A offenbart ein Verfahren zur Herstellung von Zitzengummis mit einem Kopfbereich und einem daran angrenzenden Schlauchbereich mit Bilden einer Vorform des Zitzengummis aus einer erwärmten Polymermaterialmischung mittels einer Form, und Abziehen der Vorform von einem zumindest teilweise die innere Kontur des Zitzengummis bestimmenden Elements der Form. Die Merkmale des kennzeichnenden Teils von Patentanspruch 1 sind aus dieser Schrift nicht bekannt.

Die Schrift JP 61 262112 A zeigt eine Vorrichtung zum Abziehen eines durch ein Spritzgußverfahren hergestellten Faltenbalgs unter Verwendung einer am unteren Ende des Faltenbalgs angreifenden Greifzange.

Die WO 98/50213 A zeigt ein Verfahren und eine Vorrichtung zum Abnehmen eines Elements aus biologisch verträglichem Polymermaterial von einer Haltestruktur, auf der das Polymermaterial beispielsweise durch Aufschäumen gebildet werden kann. Dabei ist das innere Halteelement ein bewegliches Element, so dass das Herauslösen dieses Halteelements aus dem Polymerelement möglich ist, während das Polymerelement an einem Endbereich gehalten wird.

Schließlich zeigt die JP 63 29 69 17 A ein Verfahren und eine Vorrichtung, in der eine Muffe für das Achsengelenk eines Fahrzeugs durch ein Spritzgußverfahren hergestellt wird. Nach dem Entfernen der äußeren Formteile wird das Spritzgußelement von einem zentralen Formteil abgenommen, in dem eine Ausdehnung des Spritzgußteils hervorgerufen wird.

Im Hinblick auf das zuvor genannte Problem wird gemäß einem Aspekt der vorliegenden Erfindung ein Verfahren zur Herstellung einer Vorform eines Zitzengummis gemäß Anspruch 1 und eine Vorrichtung zum Abziehen einer Vorform eines Zitzengummis gemäß Anspruch 18 bereit gestellt.

Durch diese Maßnahme kann somit die Vorform des Zitzengummis von innen her mit dem Fluid mit Druck beaufschlagt und damit zu einem gewissen Maße von dem entsprechenden Formelement abgelöst werden, ohne dass die Gefahr einer irreversiblen Deformation des Materials im Schlauchbereich des Zitzengummis besteht. Da entsprechende elastische Grenzen der diversen Materialmischungen gut bekannt sind oder ermittelt werden können, kann somit ein geeigneter Bereich für eine maximale radiale Ausdehnung des Schlauchbereichs bei Bedarf individuell ausgewählt werden, so dass eine Vielzahl sehr unterschiedlicher Polymermaterialmischungen und insbesondere sehr weiche Materialmischungen effizient verarbeitet werden können. Es kann bei Bedarf eine relativ hohe Zugkraft, beispielsweise im Bereich von einigen Newton bis einige 100 Newton aufgewendet werden, um die Vorform abzuziehen, wobei durch die konturierte Kontaktfläche eine hohe Adhäsion und/oder ein geeigneter Reibeschluss erreicht werden kann.

In einer weiteren vorteilhaften Ausführungsform erfolgt das Begrenzen der radialen Ausdehnung durch Anordnen einer Hülse, die den Schlauchbereich zumindest teilweise im Umfang mit einem spezifizierten Spalt vor dem Einführen des Fluids umgibt. Durch die Verwendung einer Hülse lässt sich in sehr effizienter Weise ein genau einstellbarer Bereich für die gewünschte radiale Ausdehnung während des Einführens des unter Druck stehenden Fluids erreichen. Durch Anordnen von Hülsen mit unterschiedlichen Abmessungen kann damit in einfacher Weise auf unterschiedliche Anforderungen der diversen Materialmischungen reagiert werden, so dass die Verarbeitung sehr harter und auch sehr weicher Polymermaterialmischungen, d. h. die Entnahme von entsprechenden Formteilen, möglich ist. In anderen anschaulichen Ausführungsformen wird die radiale Ausdehnung während der Druckbeaufschlagung durch andere geeignete Begrenzungsoberflächen bewerkstelligt, wobei diese um zumindest den Schlauchbereich herum so angeordnet werden, dass eine relativ großflächige Abdeckung der sich ausdehnenden Außenfläche des Schlauchbereichs erfolgt, wobei jedoch auch entsprechende Zwischenräume zwischen einzelnen Abschnitten der Begrenzungsoberfläche auftreten können, die in ihrer Größe jedoch so bemessen sind, dass eine übermäßige Ausdehnung des Schlauchbereichsmaterials in diesen kleinen Zwischenräumen nicht auftritt.

Gemäß einer weiteren anschaulichen Ausführungsform umfasst das Abziehen der Vorform das in Kontaktbringen eines Teils der Vorform mit einer der Kontur des Teils der Vorform angepassten Kontaktfläche und des Ausüben einer Zugkraft mittels der Kontaktfläche. Auf diese Weise kann bei Bedarf eine relativ hohe Zugkraft, beispielsweise im Bereich von einigen Newton bis einige 100 Newton aufgewendet werden, um die Vorform abzuziehen, wobei durch die konturierte Kontaktfläche eine hohe Adhäsion und/oder ein geeigneter Reibeschluss erreicht werden kann.

Gemäß einer weiteren anschaulichen Ausführungsform bildet die Kontaktfläche einen Teil der Innenfläche der die radiale Ausdehnung begrenzenden Hülse. Somit kann der sich durch die Druckbeaufschlagung des Innenraums des Schlauchbereichs ergebende Kontakt mit der Innenfläche der Hülse vorteilhaft ausgenutzt werden, um damit gleichzeitig den zwischen der Außenseite des sich ausdehnenden Schlauchbereichs und der Innenfläche auftretenden Kraftschluss zu erhöhen. Auf diese Weise gelingt es, ein zuverlässiges Abziehverhalten zu erreichen, selbst wenn relativ lange Schlauchbereiche, die ganz oder auch teilweise auf dem entsprechenden Formelement aufgespritzt sind, hergestellt werden.

In einer Ausführungsform ist die radiale Ausdehnung auf 20 mm oder weniger begrenzt. Mit einer derartigen Einschränkung des maximalen Dehnungsbereichs lässt sich für eine große Klasse an Polymermaterialmischungen eine irreversible Deformation verhindern. Vorteilhafterweise wird dabei die radiale Ausdehnung auf 0,5 mm oder mehr eingestellt, so dass sich ein zuverlässiges Ablösen von anliegenden Schlauchbereichen und auch des Kopfbereichs von dem Formelement erreichen lässt. Auf diese Weise kann die Haftung der Vorform an dem die innere Kontur des Zitzengummis bestimmenden Element der Spritzgussform deutlich verringert werden, so dass dann das Abziehen erfolgreich durchgeführt werden kann.

In einer weiteren vorteilhaften Ausführungsform wird während des Einführens des Fluids zur Verbesserung der Dichtungseigenschaften zumindest ein Endbereich des Schlauchbereichs mechanisch in radialer Richtung fixiert. Durch diese zusätzliche mechanische Fixierung des Endbereichs kann somit der entsprechende Arbeitsdruck des einzuführenden Fluids relativ hoch gewählt werden, so dass dementsprechend ein effizientes Verringern der Haftung an dem Formelement erreicht wird. Die mechanische Fixierung kann beispielsweise durch in Kontakt bringen entsprechender Andruckflächen oder durch geeignete Formgebung einer entsprechenden Düse zur Einführung des unter Druck stehenden Fluids erreicht werden, wie dies nachfolgend detaillierter beschrieben ist.

Ferner ermöglicht es die mechanische Fixierung in radialer Richtung, dass zusätzlich eine axiale Kraft auf den Endbereich ausgeübt wird, die zugleich auch zu einer Stauchung zumindest des Schlauchbereichs führt, so dass aufgrund der elastischen Eigenschaften eine gewisse Aufweitung stattfindet, die damit zu einer besseren Ablösung von dem Formelement beiträgt.

In einer weiteren vorteilhaften Ausführungsform wird zumindest der Kopfbereich während der Einführung des Fluids von einer Greifereinheit mit Kraft beaufschlagt. Durch diese Ausübung einer entsprechenden Kraft kann die Wirkung des unter Druck stehenden Fluids im Kopfbereich zur Verringerung der Haftung an dem Formelement deutlich verbessert werden, da sich beispielsweise ein entsprechender Strömungsweg des Fluids durch den Schlauchbereich in dem Kopfbereich und aus diesem heraus erzeugen lässt. Auf Grund der einsetzenden Fluidströmung wird dann die weitere Ablösung des Kopfbereichs noch weiter unterstützt, so dass sich ein zuverlässiges Abziehen der gesamten Vorform erreichen lässt.

In einer weiteren vorteilhaften Ausbildung wird zum Einführen des unter Druck stehenden Fluids eine Düse mit Dichtfläche zum Endbereich des Schlauchbereichs bewegt und angedrückt. Durch diese Art der Fluideinführung wird erreicht, dass beispielsweise die Andruckkraft der Düse individuell einstellbar ist, unabhängig von anderen mechanischen Komponenten, die zum Ausführen des erfindungsgemäßen Verfahrens eingesetzt werden, so dass damit auch das Dichtverhalten der Düse beim Einführen des Fluids verbessert werden kann. Insbesondere ermöglichen es die Dichtflächen im Zusammenwirken mit der Andruckkraft relativ hohe Arbeitsdrücke anzuwenden, so dass selbst größere Vorformen oder stark anhaftende Vorformen von dem Formelement abgezogen werden können. So kann es durch Prozessschwankungen während des Anspritzens der Vorform vorkommen, dass bei einigen Vorformen eine größere Haftung auftritt, wobei dann auf Grund des hohen einstellbaren Arbeitsdruckes dennoch ein zuverlässiges Abziehen möglich ist. Beispielsweise kann es nach einer längeren Standzeit oder Unterbrechung beim Spritzverfahren zu einer geringfügigen Temperaturschwankung im Prozessablauf kommen, die sich dann bei entsprechenden Materialmischungen in einer erhöhten Haftung ausdrückt. Somit werden durch entsprechende Temperaturschwankungen oder andere Prozessfluktuationen hervorgerufene Änderungen des Verhaltens beim Abziehen durch die Möglichkeit der Anwendung eines hohen Arbeitsdrucks des Fluids effizient kompensiert.

In einer weiteren Ausführungsform wird nach dem Abziehen ein Ausheizen der Vorform des Zitzengummis zur Einstellung der endgültigen Materialeigenschaften ausgeführt. Eine entsprechende Vorgehensweise lässt sich effizient durchführen, da die nach dem Spritzen bereitstehende Vorform, die in diesem Zustand äußerst empfindlich ist auf mechanische Deformation auf Grund der noch nicht stabilisierten Molekularstruktur, effizient von der Form entnommen werden kann und dann dem Temperungsvorgang unterzogen werden kann, wobei dann eine große Anzahl an Vorformen gleichzeitig behandelt werden kann. Auf diese Weise kann die Prozessdurchlaufzeit zur Herstellung des Zitzengummis im Wesentlichen auf den durch die Spritzgussvorrichtung vorgegebenen Zyklus und damit deren Kapazität eingestellt werden, da entsprechende Nachbehandlungen in der Spritzgussform zur Stabilisierung des Vorform, um damit den Abziehvorgang zu verbessern, nicht erforderlich sind.

Vorteilhafterweise ist die Polymermaterialmischung eine Silikonmischung, da diese besonders vorteilhafte Eigenschaften während der Verwendung des Zitzengummis besitzt, wie dies zuvor beschrieben ist. Somit können selbst anspruchsvolle Materialmischungen, die für weiche und damit für die Tiergesundheit und die Effizienz des Melkens günstige Eigenschaften aufweisen, in effizienter Weise, d. h. bei hohem Durchsatz und hoher Qualität, verarbeitet werden.

In einer Ausführungsform beträgt die Temperatur der Vorform während des Abziehens 150 Grad C oder mehr. Mit diesem Temperaturbereich kann somit der Abziehvorgang bereits in einer Phase unmittelbar nach dem Spritzgießen erfolgen, da auf Grund der Begrenzung der radialen Ausdehnung die bei hoher Temperatur der Verformung auftretende hohe Empfindlichkeit gegen mechanische Deformationen wirksam kompensiert werden kann. Damit lässt sich die Durchlaufzeit reduzieren, wodurch die Anlagenauslastung verbessert und damit auch die Gesamtkosten gesenkt werden.

In einer weiteren vorteilhaften Ausführungsform umfasst das Verfahren das Steuern des Fluiddrucks und einer axialen Kraft derart, dass ein vorgegebener Bereich für diese Werte eingehalten wird. Die Steuerung dieser beiden Parameter ermöglicht somit eine effiziente Anpassung an unterschiedliche Betriebsbedingungen, die etwa durch Schwankungen des vorhergehenden Anspritzens und/oder durch unterschiedliche Polymermaterialmischungen auftreten können.

In einer weiteren vorteilhaften Ausführungsform umfasst das Verfahren das Prüfen, ob die Vorform erfolgreich abgezogen wurde und das Wiederholen des Abziehvorgangs, wenn der vorhergehende Anziehvorgang nicht erfolgreich war. Auf diese Weise kann die Zuverlässigkeit des gesamten Prozessablaufs deutlich verbessert werden, da der entsprechende Abziehvorgang bei Nichterfolg wiederholt wird, so dass in der Regel das entsprechende Formteil auch nach einem nicht erfolgreichen ersten Versuch rasch für den weiteren Produktionsablauf wieder zur Verfügung steht.

In einer weiteren vorteilhaften Ausführungsform wird beim Wiederholen zumindest der Fluiddruck erhöht, so dass die ausgeprägte Haftung des Vorformmaterials an dem Formelement effizient überwunden wird, um somit die Wahrscheinlichkeit des erfolgreichen Durchführens des anschließenden Abziehvorgangs zu erhöhen.

Gemäß einem weiteren Aspekt der vorliegenden Erfindung wird eine Vorrichtung zum Abziehen einer Vorform eines Zitzengummis, der einen Kopfbereich und einen Schlauchbereich aufweist, bereitgestellt, die die Merkmale gemäß Anspruch 18 aufweist.

Mit dieser Vorrichtung gelingt es, eine radiale Ausdehnung zumindest des Schlauchbereichs auf einen definierten maximalen Wert zu begrenzen, so dass eine irreversible Veränderung des Materials der Vorform im Wesentlichen vermieden wird, wie dies zuvor bereits dargelegt ist. Auf diese Weise gelingt es, die Vorform unmittelbar nach dem Spritzgießen zuverlässig weiter zu verarbeiten, so dass die erfindungsgemäße Vorrichtung in Kombination mit einer entsprechenden Spritzgussanlage für einen hohen Durchsatz und eine hohe Qualität sorgt, da insbesondere der kritische Abziehvorgang bei hoher Temperatur zuverlässig und in automatisierter Weise ausgeführt werden kann.

In einer weiteren vorteilhaften Ausführungsform weist die Begrenzungseinrichtung eine Hülse auf, die den Schlauchbereich zumindest teilweise im Umfang umschließt, um einen Spalt zwischen der Außenseite des Schlauchbereichs und einer Innenfläche der Hülse zur Begrenzung der radialen Ausdehnung zu definieren. Dabei kann die Hülse eine relativ starre Einheit sein, die somit einen vorgegebenen Durchmesser und damit auch eine maximale radiale Ausdehnung des Schlauchbereichs vorgibt. In anderen Ausführungsformen kann die Hülse eine geeignete Anordnung aus entsprechenden Kontaktflächen sein, die zumindest während der Druckbeaufschlagung des Schlauchbereichs in geeigneter Weise an diesen herangeführt werden, so dass eine effiziente Begrenzung der radialen Ausdehnung erreicht wird.

Vorteilhafterweise ist die Begrenzungseinrichtung ausgebildet, die radiale Ausdehnung auf 20 mm oder weniger zu begrenzen. Wie zuvor bereits erläutert ist, kann eine entsprechende Festlegung einer maximalen Ausdehnung für eine große Bandbreite an Materialmischungen eingesetzt werden, so dass sich ein hohes Maß an Flexibilität bei der Verarbeitung entsprechender Polymermaterialmischungen ergibt. In anderen Ausführungsformen ist die Begrenzungseinrichtung ausgebildet, die radiale Ausdehnung individuell einstellbar vorzugeben, wobei auch entsprechend unterschiedliche Abmessungen der Zitzengummis berücksichtigt werden können. Dazu können beispielsweise eine Vielzahl entsprechender Hülsen mit fest vorgegebener Abmessung und Struktur vorgesehen werden, die dann in geeigneter Weise installiert werden, oder die Begrenzungseinrichtung verfügt über entsprechende Kontaktflächen, die mit einstellbaren Abstand zum Schlauch bereich angeordnet werden können, um damit auf die unterschiedlichen Anforderungen zu reagieren.

Vorteilhafterweise weist die Hülse Gasauslässe auf, die bei der radialen Ausdehnung des Schlauchbereichs das Auftreten von Gaseinschlüssen zwischen der Innenfläche der Hülse und dem Material des Schlauchbereichs im Wesentlichen verhindern. Somit kann sich das Material der Vorform an die Innenfläche der Hülse anschmiegen, so dass insgesamt auch eine hohe Haftung zwischen der Vorform und der Hülse erreicht werden kann. Die Gasauslässe können dabei eine beliebige geeignete Form aufweisen, beispielsweise können diese als Bohrungen, als spaltförmige Elemente, und dergleichen vorgesehen sein. In einigen Ausführungsformen ist dabei die wirksame Fläche der Gasauslässe so bemessen, dass bei Anliegen des Fluiddrucks, eine nennenswerte "Ausstülpung" des Materials der Vorform in den Gasauslaß hinein vermieden wird, während in anderen Ausführungsformen eine gewisse Ausstülpung durch eine geeignete Wahl der Fläche der Öffnungen für gegebene Prozessparameter und Eigenschaften der Vorform erzeugt wird, so dass sich die Vorform mit der Begrenzungsoberfläche "verzahnt". Somit lässt sich eine sehr intensive mechanische Kopplung zwischen der Vorform und der Begrenzungsvorrichtung erreichen, wodurch der Abziehvorgang wirksam unterstützt wird. Die Bemessung der Größe der Gasauslässe kann durch ein entsprechendes Testverfahren ermittelt werden, in dem der Grad der Ausstülpung und die Reversibilität der Verformung der Vorform für diverse unterschiedliche Vorformen und Betriebsbedingungen für den Abziehvorgang untersucht werden.

In einer weiteren vorteilhaften Ausführungsform weist die Begrenzungseinrichtung eine bei der radialen Ausdehnung des Schlauchbereichs mit diesen in Kontakt tretende Oberfläche auf, wobei diese Oberfläche eine die Adhäsion oder die Reibung fördernde Oberflächeneigenschaft besitzt. Auf diese Weise kann während der Druckbeaufschlagung des Innenraums der Vorform somit eine hohe Haftung zwischen den Begrenzungsoberflächen der Begrenzungseinrichtung und dem Schlauchbereich erreicht werden, wobei die verbesserte Haftung dann vorteilhafterweise ausgenutzt werden kann, um den Abziehvorgang zu unterstützen.

In einer weiteren vorteilhaften Ausführungsform umfasst die Begrenzungseinrichtung ferner eine relativ zu dem Formelement axial bewegliche Düse, so dass das Fluid auch unter relativ hohem Druck in den Schlauchbereich eingeführt werden kann. Dabei kann in einer Ausführungsform die relativ zu dem Formelement axial bewegliche Düse in ihrer Anpresskraft beim Kontakt mit dem Schlauchbereich einstellbar sein, so dass dadurch entsprechend hohe Arbeitsdrücke eingesetzt werden können, die auch das Abziehen relativ großer oder langer Zitzengummis ermöglichen. Beispielsweise können effizient Zitzengummis hergestellt werden, bei denen ein Teil des Milchschlauches, der aus dem Zitzenbecher herausragt, integral angeformt ist, wobei dennoch eine effiziente Entnahme oder Ablösung von den entsprechenden Formteilen bewerkstelligt werden kann. Insbesondere bei der Verwendung weicher Polymermaterialmischung, beispielsweise Silikonmischungen, ergibt sich in Verbindung mit dem aufgeheizten Formteil eine sehr hohe Haftung, die jedoch auf Grund des hohen Arbeitsdruckes des eingeführten Fluids effizient reduziert werden kann.

In einer weiteren vorteilhaften Ausführungsform bildet die mit dem Schlauchbereich in Kontakt tretende Oberfläche einen Teil der Kontaktfläche, die zur Erzeugung einer axialen Kraft eingesetzt wird. Auf Grund der Nutzung der Oberfläche der Begrenzungseinrichtung nicht nur zur Begrenzung der radialen Ausdehnung, sondern auch als ein Teil der Kontaktfläche, die damit ggf. auch teilweise der Kontur der Außenfläche der Vorform nachgebildet ist, lässt sich damit ein effizienter Kraftschluss erreichen, um damit das Abziehen zu ermöglichen. Insbesondere bei großen oder langen Zitzengummis ist eine großflächige Kontaktfläche für ein effizientes Abziehen der Vorform vorteilhaft.

In einer weiteren vorteilhaften Ausführungsform weist die Kontaktfläche zumindest einen ersten Kontaktflächenbereich zur Kontaktierung eines Kopfbereichs -der Vorform und einen zweiten Kontaktflächenbereich zur Kontaktierung eines Endbereichs der Vorform auf. Mit dieser Ausbildung lässt sich der Kopfbereich der Vorform, der in der Regel bündig an einer Endplatte der Spritzgussform anhaftet, während und/oder nach der Beaufschlagung mit dem unter Druck stehenden Fluid leicht deformieren, so dass dadurch ein entsprechender Fluidströmungsweg aus dem Kopfbereich heraus geschaffen wird, der dann das endgültige Ablösen des Vorformmaterials unterstützt. Des weiteren kann durch die Kontaktierung des Endbereichs eine effiziente Einführung des Fluids bewerkstelligt werden, da damit das Dichtverhalten in diesem Bereich verbessert werden kann.

In einer vorteilhaften Ausführungsform ist der erste Kontaktflächenbereich durch die Oberfläche von Backen einer ersten Greifereinrichtung und der zweite Kontaktflächenbereich durch die Oberfläche von Backen einer zweiten Greifereinrichtung gebildet. Durch Vorsehen der ersten und zweiten Greifereinrichtung ergibt sich ein mechanisch effizienter Kontakt, wobei gleichzeitig kosteneffiziente und bewährte Konstruktionen eingesetzt werden können.

Vorteilhafterweise ist in einer Ausführungsform ein dritter Kontaktflächenbereich vorgesehen, der in Längsrichtung des Schlauchbereichs zwischen dem ersten und dem zweiten Kontaktflächenbereich angeordnet ist. Auf diese Weise kann die zum Abziehen erforderliche axiale Kraft besser über die gesamte Länge der Vorform hinweg verteilt werden, so dass auch Zitzengummis mit größerer Länge effizient bearbeitet werden können.

In einer vorteilhaften Ausführungsform ist die Innenfläche der Hülse, d. h. der die radiale Ausdehnung begrenzenden Einrichtung, zumindest teilweise der Kontur der abzuziehenden Vorform nachgebildet. Auf Grund dieser Ausbildung wird somit ein sehr großflächiger Formschluss beim radialen Ausdehnen des Materials erreicht, so dass insgesamt auch größere axiale Kräfte beim Abziehen ausgeübt werden können. Dazu kann die Innenfläche der Hülse eine geeignete Struktur aufweisen, so dass in Verbindung mit dem sich andrückenden elastischen Material der Vorform ein hoher Reibeschluss erreicht wird. In anderen Fällen kann die Hülse mit geeigneten Materialien ausgekleidet sein, um im Zusammenwirken mit der Materialmischung der Vorform eine entsprechende hohe Adhäsion und/oder Reibung zu entwickeln.

In einer weiteren vorteilhaften Ausbildung ist die Vorrichtung ausgebildet, mehrere Vorformen gleichzeitig abzuziehen. Auf diese Weise kann der Durchsatz der Anlage geeignet erhöht werden.

In einer weiteren vorteilhaften Ausführungsform ist ferner eine Steuereinheit vorgesehen, die ausgebildet ist, den Fluiddruck und eine beim Abziehen ausgeübte Zugkraft in einem spezifizierten Bereich zu halten. Mittels der Steuereinheit kann somit ein genau definierter Betriebszustand eingehalten werden, wobei beispielsweise die Steuereinrichtung auch entsprechende unterschiedliche Betriebszustände für das Abziehen hervorrufen kann, wenn dies auf Grund von Prozessfluktuationen und/oder unterschiedlichen Materialmischungen während des vorhergehenden Arbeitsganges zur Kompensierung unterschiedlicher Hafteigenschaften beim Abziehen erforderlich ist.

In einer weiteren vorteilhaften Ausführungsform ist die Steuereinheit ferner ausgebildet, eine nicht abgezogene Vorform zu erkennen und eine spezifizierte Korrekturfunktion automatisch auszuführen. Auf diese Weise kann der gesamte Herstellungsablauf für den Zitzengummi in automatisierter und damit äußert ökonomischer Weise ausgeführt werden, da die spezifizierte Korrekturfunktion so festgelegt werden kann, dass die Auswirkungen auf die Gesamtanlage gering bleiben. Beispielsweise kann eine entsprechende Alarmfunktion vorgesehen sein, so dass ein Bediener der Anlage verständigt wird. In einer Ausführungsform beinhaltet die Korrekturfunktion eine Wiederholung des Abziehvorgangs, wobei ggf. unterschiedliche Betriebsparameter für das Abziehen verwendet werden, um nunmehr eine zuverlässige Ablösung des Vorformmaterials von dem Formelement zu bewerkstelligen. Dabei können bei Bedarf auch Betriebsparameterwerte angewendet werden, die ggf. eine Beeinträchtigung der Vorform bewirken, jedoch zuverlässig das Abziehen der Vorform ermöglichen. Beispielsweise kann zumindest der Fluiddruck erhöht werden, um damit die stark haftende Vorform erfolgreich abzuziehen. Da der entsprechende Abziehvorgang in der Regel deutlich kürzer ist als der entsprechende Vorgang zum Herstellen der Vorform wird durch die automatische Wiederholung des Abziehvorgangs nur zu einer insgesamt geringen Zunahme der Gesamtdurchlaufzeit beigetragen, so dass damit auch bei auftretenden Fehlversuchen während des Abziehens insgesamt eine hohe Effizienz der Gesamtanlage ermöglicht wird.

Weitere vorteilhafte Ausführungsformen, Merkmale und Aufgaben der vorliegenden Erfindung gehen auch aus der folgenden detaillierten Beschreibung, den Zeichnungen und den angefügten Patentansprüchen hervor.

Es werden nun weitere Ausführungsformen detaillierter mit Bezugnahme zu den angefügten Zeichnungen beschrieben, in denen:
Fig. 1 a eine schematische Querschnittsansicht einer Zitzengummivorform zeigt, die auf der Grundlage einer entsprechenden Form hergestellt ist und in einem nachfolgenden Arbeitsvorgang von zumindest einem entsprechenden Formelement abgenommen werden soll,
Fig. 1b schematisch eine Querschnittsansicht der Vorform während des Abziehvorgangs von einem Formelement zeigt, wobei die radiale Ausdehnung zumindest eines Schlauchbereichs des Zitzengummis erfindungsgemäß begrenzt wird,
Fig. 1c schematisch eine Querschnittsansicht der Vorform des Zitzengummis beim Abziehen gemäß einer weiteren anschaulichen Ausführungsform zeigt, wobei eine teilweise der Kontur angepasste Kontaktfläche zum Ausüben einer axialen Kraft eingesetzt ist,
Fig. 1d schematisch ein Endbereich des Zitzengummis bei Kontaktierung mit einem entsprechenden Greiferelement gemäß einer Ausführungsform zeigt,
Fig. 1e schematisch eine Begrenzungseinrichtung zur Festlegung der maximalen radialen Ausdehnung des Schlauchbereichs gemäß einer weiteren Ausführungsform zeigt, in der die Begrenzungsfläche im Wesentlichen der Kontur des Zitzengummis nachgebildet ist,
Fig. 1f und 1g schematisch Querschnittsansichten einer Hülse zur Begrenzung der radialen Ausdehnung des Schlauchbereichs zeigen, wobei entsprechende Oberflächeneigenschaften der Innenfläche der Hülse so vorgesehen sind, dass die Haftung bzw. die Reibung mit dem Zitzengummimaterial verbessert wird, ohne die Vorform zu beschädigen,
Fig. 1h schematisch eine Querschnittsansicht einer Düse zum Einführen eines unter Druck stehenden Fluids gemäß einer anschaulichen Ausführungsform zeigt,
Fig. 2a und 2b weitere Ausführungsformen eines Teils einer Vorrichtung zum Abziehen von Zitzengummivorformen zeigen und
Fig. 2c schematisch eine Vorrichtung zur Bearbeitung mehrerer Zitzengummivorformen zeigt, wobei eine Steuereinrichtung vorgesehen ist, um einen oder mehrere Prozessparameter zu überwachen.

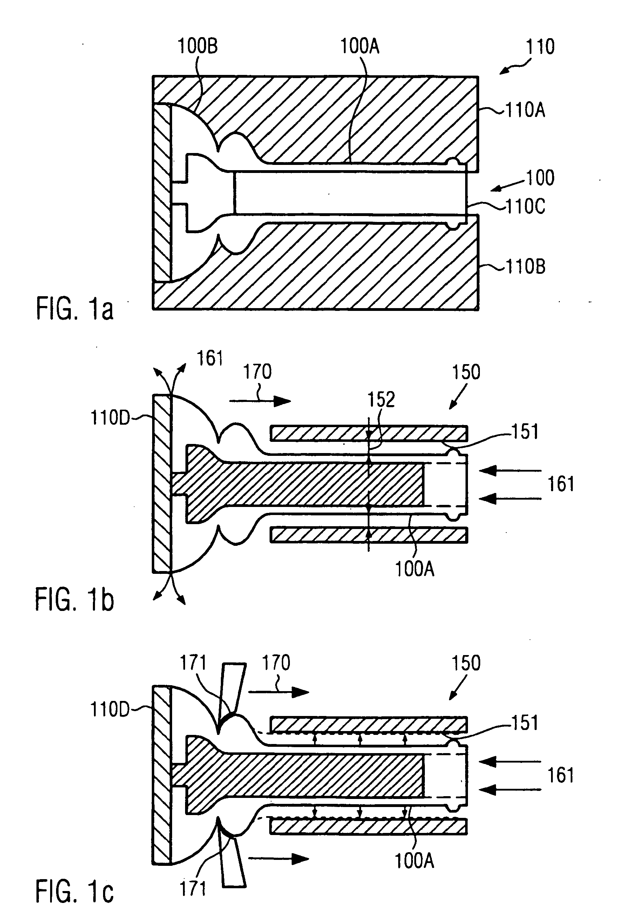

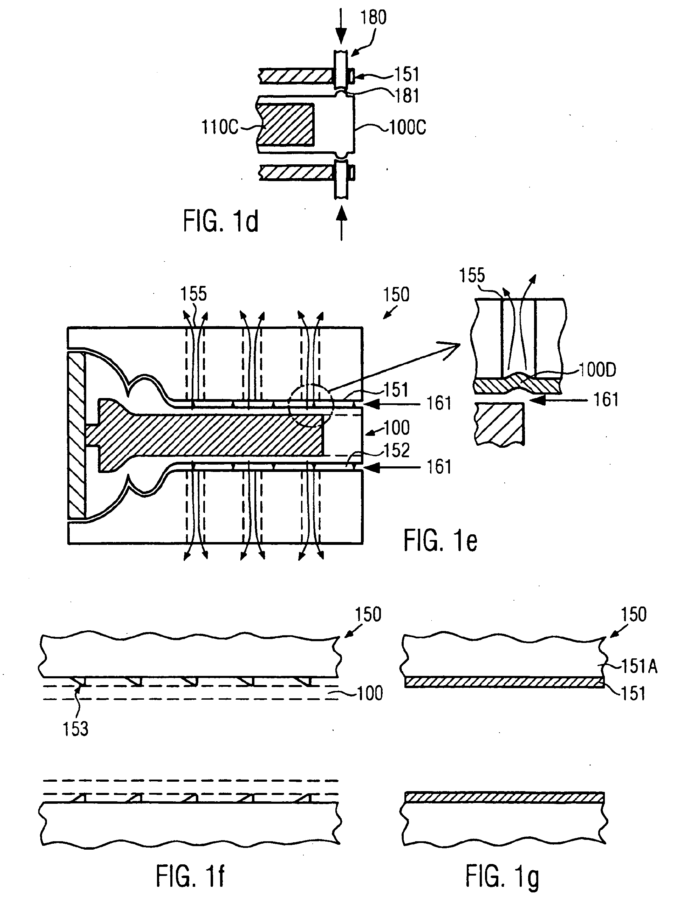

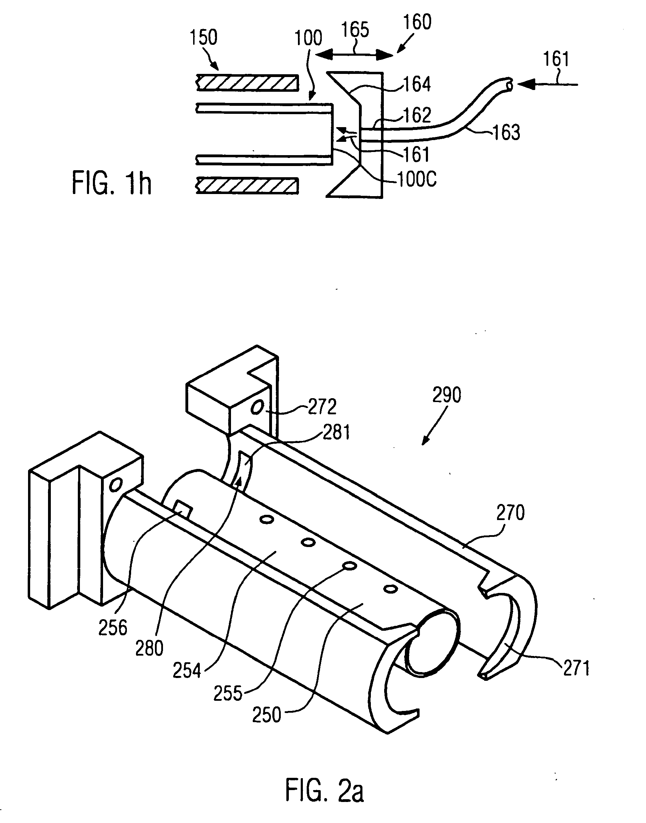

Fig. 1 a zeigt schematisch eine Schnittansicht einer Spritzgussform 110, in der eine Vorform 100 eines Zitzengummis aus einer geeigneten Polymermaterialmischung ausgebildet ist. Die Form 110 ist beispielsweise ein Bestandteil einer entsprechenden Spritzanlage, in der die gewünschte Polymermaterialmischung aufbereitet oder zum Einführen in die Form 110 bereitgestellt wird. Der Einfachheit halber ist eine entsprechende Anlage nicht gezeigt. Die Form 110 kann eine beliebige geeignete Struktur aufweisen, um damit eine gewünschte Größe und Gestalt der Vorform 100 zu definieren. Insbesondere kann die Form 110 entsprechende Formteile 110a, 110b aufweisen, die im Wesentlichen die äußere Kontur der Vorform 100 repräsentieren, während ein entsprechendes Formelement 110c die innere Kontur der Vorform 100 definiert. Zu beachten ist, dass die Formteile 110a, 110b beispielsweise als entsprechende Halbschalen oder als Zylinder vorgesehen sein können, die um das Formelement 110c herum angeordnet werden, um damit die endgültige Gestalt der Vorform 100 zu definieren. Zu beachten ist auch, dass die Anzahl und die Gestalt der Formelemente 110a, 110b in beliebiger Weise vorgegeben sein kann, sofern die gewünschte Größe, Form und Materialstärke der Vorform 100 erreicht wird.

Während der Herstellung der Vorform 100 wird eine geeignete Polymermaterialmischung, die speziell auf die gewünschten Eigenschaften des Zitzengummis ausgewählt wird, aufbereitet und unter einem entsprechenden hohen Druck in die Form 110 eingeführt, die gegebenenfalls eine hohe Temperatur aufweist. In einer vorteilhaften Ausführungsform ist die Polymermaterialmischung eine Silikonmischung, die schließlich zu einem verbesserten Verhalten beim Melkvorgang führt, wie dies zuvor erläutert ist. Beim Einführen der Polymermaterialmischung in die Form 110 können dabei entsprechende Parameter variiert werden, etwa der Druck und die Temperatur, wie dies für ein zuverlässiges Auffüllen des in der Form 110 erzeugten Hohlraums für die spezielle Materialmischung günstig ist. Dabei können entsprechende Prozesszeiten von mehreren Sekunden bis einige Minuten geeignet sein. Nach dem Ende der vorgegebenen Prozesszeit werden dann zumindest die Formteile 110a, 110b in geeignete Weise automatisch abgenommen, beispielsweise durch Öffnen entsprechender Greifereinheiten, und dergleichen, wobei je nach Ausbildung der Form 110 und Prozessstrategie auch ein Teil des Formelements 110c aus einem Schlauchbereich 100a herausgeführt werden kann, während in der Regel ein Kopfbereich 100b der Vorform 100 weiterhin auf dem Formelement 110c haftet.

Fig. 1b zeigt die Vorform 100 in einem weiteren Prozessschritt, wobei die Vorform 100 mit dem Schlauchbereich 100a und dem Kopfbereich 100b zumindest auf einem Teil des Formelements 110c haftet und damit von dem Formelement 110c ohne unerwünschte Materialbeeinträchtigung abgezogen werden muss. D.h., ein Teil des Formelements 110c kann bereits entfernt sein, wie dies durch die gestrichelten Umrisse angedeutet ist, so dass der vordere Teil des Formelements 110c, der schraffiert gezeigt ist, die Vorform 100 hält. In anderen Fällen kann das Formelement 110c in im wesentlichen unveränderter Größe während des Abziehens vorhanden sein. Dazu wird eine entsprechende Begrenzungsvorrichtung 150 vorgesehen, die ausgebildet ist, eine radiale Ausdehnung bzw. Aufweitung zumindest des Schlauchbereichs 100a, der in der Regel eine geringere Materialstärke aufweist als der Kopfbereich 110b, auf einen festgelegten Bereich zu begrenzen. Dazu weist die Begrenzungsvorrichtung 150 geeignet ausgebildete begrenzende Oberflächenbereiche 151 auf, die bei Beaufschlagung des Innenraums des Schlauch bereichs 100a mit einem unter Druck stehenden Fluid 161 mit dem sich ausdehnenden Material der Vorform 100 in Kontakt treten, wodurch eine weitere Ausdehnung verhindert und eine effiziente Ablösung des Materials der Vorform 100 von dem Formelement 110c bewirkt wird. Beispielsweise ist in der gezeigten Ausführungsform ein entsprechender Bereich oder Spalt 152 dargestellt, der eine maximale Ausdehnung des Schlauchbereichs 100a vorgibt. Bei der Verarbeitung von weichen Polymermaterialmischungen kann bei Beaufschlagung mit dem Fluid 161 zumindest in dem relativ dünnwandigen Schlauchbereich 100a teilweise eine extreme Aufweitung auftreten, so dass konventioneller Weise entsprechende weiche Polymermischungen, etwa Silikon, in der Regel nicht in entsprechend automatisierten Anlagen unmittelbar nach dem Anspritzen verarbeitet werden. Die entsprechenden Begrenzungs- oder Oberflächen 151 zu Begrenzung des Bereichs 152 für die maximale radiale Ausdehnung sind so gestaltet, dass sie zumindest den Schlauchbereich 100a großflächig umgeben, wobei jedoch keine durchgängige Umhüllung erforderlich ist. Insbesondere können geeignete Öffnungen, wie dies nachfolgend detaillierter erläutert ist, vorgesehen sein, um beim Ausdehnen entsprechende Gaseinschlüsse in dem Bereich 152 zu vermeiden.

Die Oberflächen 151 können beispielsweise in Form einer geeigneten Hülse bereitgestellt werden, etwa in Form eines Rohres, wobei der entsprechende Innendurchmesser der Hülse in Verbindung mit dem entsprechenden Außendurchmesser der Vorform 100 den Bereich 152 festlegt. Somit können diverse Hülsen vorgesehen werden, um verschiedenen Größen der Vorform 100 Rechnung zu tragen, oder es kann eine einzelne Größe für den Bereich 152 so gewählt werden, dass unterschiedliche Vorformen bearbeitet werden können, ohne dass eine irreversible Deformierung des Materials auftritt. Beispielsweise kann der Bereich 152 auf etwa 10 mm festgelegt werden, woraus sich eine gesamte Ausdehnung von 20 mm ergibt, was für eine Vielzahl von Polymermaterialmischungen ein geeigneter Wert ist, um eine irreversible Deformation für standardmäßige Durchmesser und Materialstärken von Zitzengummis zu vermeiden. Die Oberflächen 151 können auch in Form mehrerer Oberflächenelemente bereitgestellt werden, die während des Abziehvorgangs in geeigneter Weise mit radialem Abstand zu der Vorform 100 angeordnet werden, um damit den geeigneten Bereich 152 zu definieren. Dabei ist es nicht notwendig, die Außenfläche der Vorform 100 ganzflächig abzudecken, sofern entsprechende nicht abgedeckte Bereiche des Schlauchbereichs 100a eine entsprechende laterale Abmessung aufweisen, die zu keiner "Ausstülpung" des Materials der Vorform 100 bei Beaufschlagung mit dem Fluid 161 führt. Beispielsweise können die Oberflächen 151 in Form von Schalenteilen, beispielsweise zwei Schalenhälften, vorgesehen werden, die während des Prozesses in geeigneter Weise positioniert werden, wobei der Bereich 152 in einigen Ausführungsformen durch Variieren des entsprechenden Abstands in einem gewissen Bereich einstellbar ist.

Während des Abziehvorgangs wird nach der Positionierung der Oberflächen 151 der Begrenzungseinrichtung 150 der Innenraum des Schlauchbereichs 100a mit dem unter Druck stehenden Fluid 161 beaufschlagt, wobei das Fluid 161 ein geeignetes Gas, etwa Druckluft, oder ein anderes Gas, etwa Stickstoff, sein kann, um damit eine Ablösung von dem Formelement 110c zu erreichen. In einigen Ausführungsformen kann das Fluid 161 auch in Form einer Flüssigkeit bereitgestellt werden, sofern die Begrenzungseinrichtung 150 in einer geeigneten Umgebung betrieben wird, so dass das austretende Fluid 161 in geeigneter Weise abgeführt werden kann. Auf Grund des einströmenden Fluids 161 wird, wenn eine weiche Materialmischung in der Vorform 100 verwendet ist, auf Grund der hohen Elastizität die Außenfläche zumindest des Schlauchbereichs 100a zunehmend an die Oberfläche 151 gedrückt, wobei zunehmend auch eine gewisse Ablösung des Materials des Kopfbereichs 100b von dem entsprechenden Teil des Formelements 110c stattfindet. Zur Unterstützung des Ablösevorgangs und zur Erzeugung eines geeigneten Fluidströmungswegs aus dem Kopfbereich 100b heraus, der in der Regel auch relativ fest an einer entsprechenden Abschlussplatte 110d der Form 110 haftet, wird in einigen anschaulichen Ausführungsformen eine entsprechende Kraft durch eine in Fig. 1b allgemein als 170 bezeichnete Vorrichtung ausgeübt. Durch diese im Wesentlichen in axialer Richtung ausgeübte Kraft der Einrichtung 170 findet eine geringfügige Ablösung bzw. Verformung des Materials an der Platte 110d statt, so dass - das Fluid 161 dort entsprechend austreten kann und damit zu einer weiteren besseren Ablösung von dem Formelement 110c beiträgt. Durch die Vorrichtung 170 kann die entsprechende axial wirkende Kraft weiterhin ausgeübt werden, um schließlich die Vorform 100 vollständig von dem Formelement 110c zu trennen. Somit wird das Material der Vorform 100 nach dem Spritzgießen, wenn dieses noch auf einer relativ hohen Temperatur ist, die beispielsweise bei über 150 Grad C liegen kann, keiner irreversiblen Deformation unterzogen, so dass die Formtreue der Vorform 100 nach dem Abziehvorgang gewahrt bleibt und die endgültigen Materialeigenschaften in einer nachfolgenden Behandlung, etwa einem Ausheizen so dann in geeigneter Weise eingestellt werden können. Auf Grund des automatisierten und schonenden Vorgangs des Abziehens der Vorform 100 von dem Formelement 110c kann dieses unmittelbar danach für einen weiteren Herstellungsprozess einer weiteren Vorform dienen, so dass insgesamt ein hoher Anlagendurchsatz erreicht wird, da insbesondere der Vorgang des Abziehens typischerweise wesentlich schneller erfolgt als der Vorgang des Anfertigens der Vorform 100, der einige 10 Sekunden bis wenige Minuten betragen kann.

In einigen Ausführungsformen ist die Vorrichtung 170 zum Ausüben der axialen Kraft in geeigneter Weise mechanisch mit der Begrenzungseinrichtung 150 gekoppelt, so dass der beim Ausdehnen des Materials des Schlauchbereichs 100a auftretende Kraftschluss zwischen der Oberfläche 151 und dem Material der Vorform 100 vorteilhafterweise ausgenutzt werden kann, um eine höhere Kraft während des Abziehens, zumindest während der Anfangsphase des Abziehvorgangs, wenn noch ein ausreichend hoher Druck im Innenraum des Schlauchbereichs 100a vorhen-scht, auszuüben. Damit kann die Haftung des Kopfbereichs 100b an dem Formelement 110c wirksam überwunden werden. Zu diesem Zweck kann die Oberfläche 151 in geeigneter Weise so ausgebildet sein, dass sich eine erhöhte Haftung bzw. Reibung ergibt, wie dies nachfolgend detaillierter erläutert ist.

Fig. 1c zeigt schematisch die Vorform 100 während des Abziehens, wobei die Vorrichtung 170 entsprechende Kontaktflächen 171 aufweist, die der Kontur des Kopfbereichs zumindest über einen Teil davon nachgebildet sind. In der gezeigten Ausführungsform ist insbesondere auch die äußere Kontur des Kopfbereichs 100b so gestaltet, dass sich eine relativ hohe axiale Kraft beim Abziehen der Vorform 100 übertragen lässt. Des weiteren kann durch die Oberflächen 171, die im Wesentlichen der Form des Kopfbereichs 100b folgen, eine relativ großflächige Auflage und damit Angriffsfläche bereitgestellt werden, -so dass zum einen keine unerwünschte Schädigung beim Kontakt mit dem Kopfbereich 100b auftritt und anderseits die gewünschte hohe Kraft beim Abziehen zur Verfügung steht. Ferner kann, wie durch die gestrichelte Linie angedeutet ist, zumindest während der Anfangsphase des Abziehens auch der Kontakt mit der Oberfläche 151 zu einem effizienten Kraftschloss zwischen der Vorform 100 und der Einrichtung 170 beitragen, wie dies zuvor erläutert ist.

Fig. 1d zeigt schematisch einen Endbereich 100c der Vorform 100, wobei eine weitere Vorrichtung 180 vorgesehen ist, die entsprechende Oberflächen 181 aufweist, die mit dem Material der Vorform 100 in Kontakt gebracht werden. Dazu können die Oberflächen 181 eine beliebige geeignete Gestalt aufweisen, beispielweise können diese einer eventuell konturierten Oberflächengestalt des Endbereichs 100c nachgebildet sein, so dass sich auf Grund der Einwirkung der Vorrichtung 180 eine mechanische Fixierung des Endbereichs 100c ergibt. Auf Grund der verbesserten mechanischen Fixierung des Endbereichs 100c lässt sich damit das Fluid 161 unter einem gewünschten hohen Druck einbringen, da die Dichtigkeit des Endbereichs 100c trotz des anliegenden Drucks durch das Fluid 161 verbessert wird. In einer anschaulichen Ausführungsform ist der Endbereich 100c entsprechend so ausgestaltet, dass sich eine effiziente mechanische Fixierung der Flächen 181 erreichen lässt, wobei dies durch eine entsprechende Ausprägung in der Vorform 100 und einer geeigneten Ausbildung der Flächen 181 erreicht werden kann.

Fig. 1e zeigt schematisch die Vorform 100 in Verbindung mit der Begrenzungseinrichtung 150 gemäß einer weiteren Ausführungsform. In dieser Ausführungsform sind die Oberflächen 151 zur Begrenzung der radialen Ausdehnung der Vorform 100 großflächig der Außenform der Vorform 100 nachgebildet, so dass im Bereich des Schlauchbereichs 100a der Bereich 152 vorgesehen ist, während im Bereich des Kopfbereichs 100b bei nicht mit Druck beaufschlagtem Zustand ein Kontakt zu dem Material der Vorform 100 besteht oder ein entsprechender Zwischenraum deutlich kleiner ist, so dass beim Abziehen sich ein Kraftschluss einstellt. Auf diese Weise wird ein sehr großflächiger Reibschluss zwischen der Begrenzungsvorrichtung 150 und der Vorform 100 bei der Druckbeaufschlagung erreicht, so dass in diesem Falle die Begrenzungsvorrichtung 150 auch als die Vorrichtung 170 dienen kann, um in effizienter Weise eine axiale Kraft auf die Vorform 100 auszuüben. In dieser Ausführungsform kann somit die Begrenzungsvorrichtung 150 eine ähnliche Gestalt aufweisen, wie die Form 110 (siehe Fig. 1a), wobei jedoch im Gegensatz zur Form 110 im Schlauchbereich 100a ein entsprechender Spalt zur Erzeugung des gewünschten Bereichs 152 vorzusehen ist. Des weiteren können entsprechende Gasauslässe 155 vorgesehen sein, so dass entsprechende Gaseinschlüsse während des Ausdehnens des Materials der Vorform 100 weitestgehend vermieden werden, wie dies zuvor bereits erläutert ist. In anderen Ausführungsformen ist die Begrenzungsvorrichtung 150 zwar großflächig vorgesehen, erstreckt sich jedoch nicht notwendigerweise über die gesamte Vorform 100, sofern die erforderliche axiale Kraft während des Abziehens auf die Vorform 100 übertragen werden kann. Während des Abziehvorgangs wird die Begrenzungsvorrichtung 150, beispielsweise in Form zweier Halbschalen an die Vorform 100 angenähert und in geeigneter Weise dann geschlossen, so dass dann das Fluid 161 mit dem gewünschten Druck eingeführt werden kann, wobei gleichzeitig eine axiale Kraft durch die Vorrichtung 150 ausgeübt werden kann, um damit das Ablösen der Vorform 100 von dem Formelement 110c zu unterstützen. Durch die Ausbildung der Begrenzungseinrichtung 150 in der in Fig. 1e gezeigten Weise lassen sich auch sehr lange Vorformen 100 zuverlässig von dem entsprechenden Formelement 110c abziehen, da insgesamt eine sehr hohe axiale Kraft in Verbindung mit einem hohen Druck angewendet werden kann. Dies ist insbesondere vorteilhaft, wenn der Schlauchbereich 100a einen Schlauchteil aufweist, der über standardmäßige Melkbecher hinausragt, wie dies in vielen Melkgeschirren vorteilhaft angewendet werden kann. Auf diese Weise lassen sich sowohl der Zitzengummi als auch der anschließende Milchschlauch in einem einzelnen Arbeitsgang und aus einem sehr weichen Material, etwa Silikon, fertigen.

Die Vorrichtung 150 aus Fig. 1e kann, wie dies bereits auch für die vorhergehenden Ausführungsformen der Vorrichtung beschrieben ist, aus mehreren separaten Teilen zusammengesetzt sein, die dann in geeigneter Weise für den Abziehvorgang an der Vorform 100 zusammengeführt werden, so dass die Vorform 100 umschlossen wird.

Der vergrößerte Ausschnitt in Fig. 1e zeigt die Situation an einem der Gasauslässe 155 beim Einführen des Fluids 161, so dass das Material des Schlauchbereichs 100a an die Fläche 151 und in den Gasauslaß 155 hinein gedrückt wird. Dadurch bildet sich eine Ausstülpung 100d, die zu einer Verzahnung mit der Oberfläche 151 führt. In dieser Ausführungsform ist die wirksame Eintrittsfläche des Gasauslasses 155 so gewählt, dass für die speziellen Bedingungen, d.h., dem Druck des Fluids 161, der Dicke und der Materialstärke der Polymermischung des Schlauchbereichs 110a, dessen Temperatur, und dergleichen, die Ausstülpung 100d gebildet wird, wobei nur eine reversible Verformung auftritt, so dass sich nach dem Abziehen die ursprüngliche Form wieder einstellt. In anderen Ausführungsformen wird die Größe und die Gestalt der Gasauslässe 155, d.h., deren Eintrittsfläche, so gewählt, dass keine nennenswerte Ausstülpung gebildet wird. Die geeignete Größe und Gestalt der Eintrittsfläche zur Vermeidung einer irreversiblen Deformation kann durch Testen unter verschiedenen Bedingungen ermittelt werden. Die Gasauslässe 155 können eine beliebige Gestalt aufweisen und beispielsweise als Spalte, Bohrungen, etc vorgesehen sein, sofern die oben genannten Bedingungen hinsichtlich der Ausstülpungen 100d eingehalten werden.

Die zuvor dargelegten Aspekte für die Gasauslässe 155 gelten auch für die bereits mit Bezug zu den Fig. 1b bis 1d beschriebenen Ausführungsformen, sowie für alle weiteren Ausführungsformen.

Fig. 1f zeigt schematisch einen Querschnitt eines Teils der Begrenzungseinrichtung 150 gemäß einer anschaulichen Ausführungsform, in der die Oberfläche 151 in geeigneter Weise strukturiert ist, beispielsweise mittels entsprechender Erhebungen 153, und dergleichen, so dass insgesamt ein effizienter Kraftfluss zwischen dem Material der Vorform 100 und der Oberfläche 151 während des Anliegens des hohen Druckes erreicht wird. Die entsprechende Oberflächentopographie, beispielsweise die Erhebungen 153, können dabei in geeigneter Weise ausgebildet sein, um für die zu verarbeitende Materialmischung eine entsprechende hohe Haftung bzw. Reibung zu ermöglichen, ohne diese zu schädigen. Beispielsweise kann für weiche Materialmischungen eine ausgeprägte Topographie vorgesehen werden, während für harte Materialmischungen eine entsprechende glatte Oberfläche vorgesehen wird.

Fig. 1g zeigt schematisch einen Teil der Begrenzungsvorrichtung 150, wobei die entsprechende Oberfläche 151 durch eine geeignete Materialschicht gebildet ist, die in Verbindung mit der Materialmischung der Vorform 100 eine geeignete hohe Haftung gewährleistet. Auf diese Weise besteht ein hohes Maß an Flexibilität bei der Auswahl des "Trägermaterials" 151a für die Oberfläche 151, die dann aus einem beliebigen geeigneten Material vorgesehen werden kann, ohne dass auf andere Eigenschaften, etwa mechanische Robustheit, etc., Rücksicht genommen werden muss, da das entsprechende Trägermaterial 151 a für die mechanische Stabilität der Oberfläche 151 sorgt. Beispielsweise können auch unterschiedliche Oberflächenmaterialien 151, beispielsweise in Form dünner Rohre, etc., vorgesehen werden, die dann in das Trägerrohr 151a eingeschoben und fixiert werden, um damit unterschiedlichen Materialmischungen für die Vorform 100 Rechnung zu tragen.

Fig. 1h zeigt schematisch den Endbereich 100c der Vorform 100 in Verbindung mit einer Vorrichtung 160 zum Einführen des Fluids 161 gemäß einer anschaulichen Ausführungsform. Die Vorrichtung 160 zum Einführen des Fluids 161 umfasst in dieser Ausführungsform eine Düse 162, die mittels einer Verbindungsleitung 163 mit einem geeigneten Druckreservoir (nicht gezeigt) für das Fluid 161 verbunden ist. In der dargestellten Ausführungsform umfasst die Einrichtung 160 ferner entsprechende Dichtflächen 164, die bei Beaufschlagung der Vorform 100 mit dem unter Druck stehenden Fluid 161 ein hohes Maß an Dichtigkeit erreichen, selbst wenn eine gewisse Ausdehnung des Endbereichs 100c stattfindet. D. h., durch die schräg verlaufenden Dichtflächen 164 wird eine zunehmende Gegenkraft bei durch Druck hervorgerufener Ausdehnung des Endbereichs 100c bewirkt, so dass sich ein gutes Dichtverhalten ergibt. In einer weiteren anschaulichen Ausführungsform ist die Düse 162 zusammen mit den entsprechenden Dichtflächen 164 mechanisch relativ zu dem Endbereich 100c in der mit 165 bezeichneten axialen Richtung bewegbar, so dass eine Andruckkraft der Düse 162, d. h. der Dichtfläche 164 in geeigneter Weise eingestellt werden kann, unabhängig von den weiteren Komponenten, beispielsweise der Begrenzungseinrichtung 150. Auf diese Weise kann während des Abziehvorgangs die Dichtfläche 164 mit einer geeigneten axialen Kraft auf den Endbereich 100c aufgesetzt werden und das Fluid 161 unter einem geeignet hohen Druck eingeführt werden, wobei die erhöhte Andruckkraft für eine hohe Dichtigkeit und damit die Aufrechterhaltung des hohen Arbeitsdruckes sorgt. Damit können auch Vorformen in effizienter Weise abgezogen werden, die eine relativ hohe Haftung auf Grund der entsprechenden Baulänge oder auf Grund von Prozessschwankungen des vorhergehenden Spritzvorgangs aufweisen. Insbesondere kann in Verbindung mit einer entsprechenden Steuereinheit, die Andruckkraft und/oder der Fluiddruck einstellbar sein, so dass sich der Prozess in flexibler Weise an unterschiedliche Betriebsbedingungen anpassen kann.

Fig. 2a zeigt in einer schematischen perspektivischen Ansicht einen Teil einer Vorrichtung 290 zum Abziehen einer Vorform von einem Formteil, die zumindest einige der zuvor mit Bezug zu den Fig. 1a bis 1h beschriebenen Komponenten aufweist. Die Abziehvorrichtung 290 umfasst eine Abzieheinheit 270, die in der gezeigten Ausführungsform zwei Hälften einer konturierten Oberfläche 271 aufweist, die als Kontaktflächen dienen, um mit dem Material des Kopfbereichs der Vorform einen Reibschluss zu bilden, um damit eine axiale Kraft zum Abziehen der Vorform auszuüben, wie dies auch zuvor beschrieben ist. In der gezeigten Ausführungsform ist die Abzieheinheit 270 aus zwei Hälften aufgebaut, die an entsprechenden mechanischen Komponenten 272 montiert sind, die eine radiale Bewegung der Oberflächen 271 und eine entsprechende axiale Bewegung ermöglichen. Die mechanischen Komponenten 272 können durch beliebige geeignete Aktuatorkomponenten, etwa pneumatische, hydraulische, elektrische, oder andere Komponenten oder Kombinationen davon verwirklicht sein. Des weiteren umfasst die Vorrichtung 290 eine Begrenzungseinrichtung 250, die beispielsweise in Form einer rohrförmigen Hülse 254 vorgesehen ist, in der entsprechende Gasauslässe 255 vorgesehen sind, wie dies bereits auch in Verbindung mit Fig. 1e erläutert ist. Des weiteren ist eine Greifereinrichtung 280 vorgesehen, die mit entsprechenden Oberflächen 281 mit dem Endbereich einer entsprechenden Vorform in Kontakt gebracht werden kann, wobei dazu entsprechende Aussparungen 256 in der Hülse 254 der Begrenzungsvorrichtung 250 vorgesehen sind. Ferner ist eine entsprechende Fluideinführeinrichtung vorgesehen, die in Fig. 2a nicht erkennbar ist, wobei die Fluideinführeinrichtung eine entsprechende Düse aufweisen kann, die in der gezeigten Ausführungsform beispielsweise mit der Begrenzungseinrichtung 250 verbunden sein kann, während in anderen Ausführungsformen eine Düse vorgesehen ist, die eine Relativbewegung zur Hülse 254 ermöglicht, wie dies beispielsweise im Zusammenhang mit der Fiuideinführeinrichtung 160 in Fig. 1h erläutert ist.

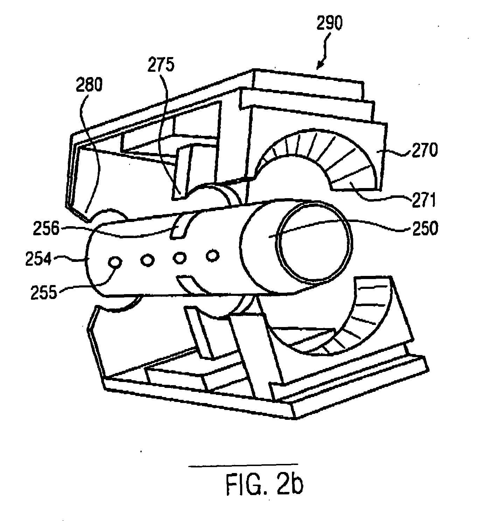

Fig. 2b zeigt eine schematische perspektivische Ansicht der Abziehvorrichtung 290 gemäß einer weiteren anschaulichen Ausführungsform, in der die Abzieheinrichtung 270 mit den entsprechenden konturierten Oberflächen 271 eine weitere Greifereinrichtung 275 aufweist, die mit entsprechenden Kontaktflächen mit dem Material der Vorform durch entsprechende Öffnungen 255 in der Hülse 254 in Kontakt gebracht werden kann. Damit sind die Kontaktflächen 271, die weitere Greifereinheit 275 und die Einrichtung 280 vorgesehen, um die Vorform direkt zu kontaktieren, wobei zumindest die Flächen 271 der Kontur der Vorform in dem entsprechenden Bereich, beispielsweise dem Kopfbereich, nachgebildet sind. Damit ist die Abziehvorrichtung 290 ausgebildet, in effizienter Weise auch Vorformen mit relativ großer Länge von einem entsprechenden Formelement abzuziehen, da sich eine relativ große axiale Kraft und auch ein hoher Arbeitsdruck in der Vorform aufbauen lassen, wobei durch die Begrenzungseinrichtung 250 in effizienter Weise eine maximale radiale Ausdehnung begrenzt wird, wie dies zuvor erläutert ist. Insbesondere kann in der Abziehvorrichtung 290 eine Fluideinführeinrichtung vorgesehen werden, die relativ zum Endbereich der Vorform bewegbar ist, wie dies beispielsweise in der Einrichtung 160 aus Fig. 1h erläutert ist, so dass ein erforderlicher hoher Arbeitsdruck aufgebaut werden kann.

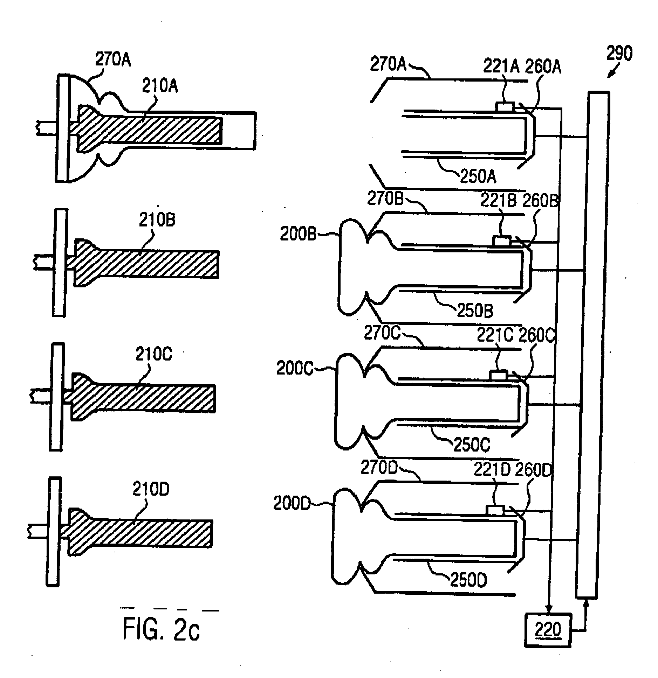

Fig. 2c zeigt schematisch die Abziehvorrichtung 290 gemäß einer weiteren anschaulichen Ausführungsform, in der mehrere Vorformen 200a, .., 200d gleichzeitig verarbeitet werden können. Dazu sind in entsprechenden Einheiten der Vorrichtung 290 mit jeweils einer Abziehvorrichtung 270a, ..., 270d, einer Begrenzungseinrichtung 250a, ..., 250d und einer Fluideinführeinrichtung 260a, ..., 260d pro Einheit vorgesehen. Des weiteren ist in der Abziehvorrichtung 290 eine Steuereinheit 220 vorgesehen, die Prozessparameter einstellt, etwa den in den jeweiligen Einheiten anzuwendenden Arbeitsdruck des entsprechenden Fluids, die Größe der axialen Kraft, die beim Abziehen ausgeübt wird, wobei diese Kraft für alle Einheiten gleich groß gewählt werden kann, wenn diese mechanisch starr miteinander gekoppelt sind, oder wobei diese Kraft individuell steuerbar ist, wozu dann entsprechende individuell bewegbare Aktuatoreinrichtungen vorgesehen sind. Des weiteren kann in einigen Ausführungsformen eine Relativbewegung der entsprechenden Fluidzuführeinrichtungen 260a, ..., 260d individuell steuerbar sein, wie dies beispielsweise im Zusammenhang mit der Fluidzufuhreinrichtung 160 in Fig. 1h beschrieben ist. In einer weiteren anschaulichen Ausführungsform sind ein oder mehrere entsprechende Sensorelemente 221a, ..., 221d vorgesehen und so positioniert, dass das Vorhandensein einer Vorform in den jeweiligen Einheiten der Abziehvorrichtung 290 mittels der Steuereinrichtung 220 detektierbar ist. Beispielsweise können die Sensoreinheiten 221a, ..., 221d geeignete Größen erfassen, etwa die Temperatur, optische Eigenschaften, elektrische Eigenschaften, akustische Eigenschaften (Ultraschall) und dergleichen, die einen Rückschluss auf die Anwesenheit oder das Fehlen einer entsprechenden Vorform geben.

Während des Betriebs der Abziehvorrichtung 290 werden die entsprechenden Begrenzungseinrichtungen 250a, ..., 250d über den Vorformen 200a, ..., 200d, die auf entsprechenden Formelementen 210a, ..., 210c nach der Herstellung haften, geeignet positioniert und die Abzieheinheiten 270a, ..., 270d werden im Zusammenwirken mit den Fluideinführeinrichtungen .260a, ..., 260d aktiviert, um den zuvor beschriebenen Abziehvorgang einzuleiten. Daraufhin wird eine axiale Bewegung der Vorrichtung 290 ausgeführt, um die entsprechenden Vorformen 200a, ..., 200d abzuziehen. Nach erfolgten Abziehvorgang können die entsprechenden Vorformen 200a, ..., 200d beispielsweise mittels der Vorrichtung 290 zu einer geeigneten Abgabestelle transportiert werden, in der die Vorformen gesammelt und einer weiteren Verarbeitung unterzogen werden. Beispielsweise können die endgültigen Materialeigenschaften der Vorformen 200a, ..., 200d durch eine nachfolgende Wärmebehandlung in geeigneter Weise eingestellt werden, so dass damit die endgültige Molekularstruktur des Polymermaterials, beispielsweise des Silikons erhalten wird. Dabei kann die Wärmebehandlung an einer Vielzahl von Vorformen gleichzeitig ausgeführt werden, so dass der Prozessdurchsatz während der Herstellung der entsprechenden Zitzengummis lediglich durch die Kapazität der entsprechenden Spritzgussanlage bestimmt ist. Somit können mehrere Vorformen gleichzeitig bearbeitet werden, wobei bei Bedarf die Prozessbedingungen bei Bedarf individuell eingestellt werden können, wenn beispielsweise die einzelnen Einheiten der Abziehvorrichtung individuell steuerbare Komponenten, etwa Ventile für den Fluiddruck, mechanische Aktuatoren, etc. aufweisen.

Beim Abziehvorgang kann es auf Grund von Prozessunterschieden zu einer unterschiedlich starken Haftung der entsprechenden Vorformen an dem jeweiligen Formelement kommen, so dass unter Umständen ein oder mehrere Abziehvorgänge nicht erfolgreich sind. In dem gezeigten Beispiel wird die Vorform 200a nicht erfolgreich abgenommen, wobei in einer Ausführungsform das entsprechende Fehlen der Vorform 200a in der Vorrichtung 290 auf der Grundlage des Sensorelemente 221 a über die Steuereinrichtung 220 erkannt wird. Diese führt dann entsprechend einem vorgegebenen Funktionsablauf eine geeignete Korrekturfunktion aus, die beispielsweise in der Benachrichtigung eines Bedieners der Anlage 290 besteht. In einer weiteren anschaulichen Ausführungsform wird nach dem Abtransport der abgezogenen Vorformen 200b, ..., 200d eine Wiederholung des Abziehvorgangs durchgeführt. Dabei können in einer Ausführungsform beispielsweise die nicht benötigen Einheiten der Abziehvorrichtung 290 beispielsweise von der Steuereinrichtung 220 deaktiviert werden , wohingegen spezielle Prozessparameter für die Abzieheinrichtung 270a und die Fluideinführeinrichtung 260a angewendet werden können. Beispielsweise kann die Steuereinrichtung 220 eine Erhöhung des Arbeitsdruckes des von der Einrichtung 260 eingeführten Fluids veranlassen, um damit die Effizienz des Ablösevorgangs zu erhöhen. Daraufhin kann das Abziehen der Vorform 200a erfolgen, wobei bei einem eventuell erneut erfolglosen Versuch weitere Korrekturmaßnahmen ergriffen werden können. Die schließlich abgenommene Vorform 200a kann dann transportiert werden oder kann ausgesondert werden, wenn auf Grund der beim Abziehen angewendeten Parametereinstellung eine mögliche Schädigung der Vorform 200a zu erwarten ist. Da der Abziehvorgang und der sich daran anschließende Transportvorgang zum Ablegen der Vorformen in der Regel deutlich kürzer ist als der entsprechende Vorgang zur Herstellung der Vorformen ergibt sich auch bei einer erfolglosen Abnahme einer der Vorformen eine nur geringfügige Reduzierung des Gesamtdurchsatzes, so dass insgesamt ein hoher Durchsatz beibehalten werden kann, wobei gleichzeitig ein hohes Maß an Automatisierung und Betriebssicherheit gewährleistet ist.

Erfindungsgemäß wird somit bei der Herstellung von Zitzengummis, insbesondere von Zitzengummis mit hohem Silikonanteil, beim Abziehen der Vorformen der Zitzengummis eine Druckbeaufschlagung durchgeführt, wobei eine entsprechende Begrenzung der radialen Ausdehnung von Zitzengummibereichen auf einen maximalen Wert erfolgt. Auf Grund dessen kann das Abnehmen automatisch und bei relativ hoher Temperatur erfolgen, ohne dass eine irreversible Materialschädigung eintritt. Der Abziehvorgang wird dabei durch eine entsprechende Kontaktfläche unterstützt, die zumindest teilweise die Außenkontur der Vorform nachbildet.

## Patentansprüche

1. Verfahren, zur Herstellung einer Vorform eines Zitzengummis mit einem Kopfbereich (100b) und einem daran angrenzenden Schlauchbereich (100a), mit
Bilden einer Vorform (100) des Zitzengummis aus einer erwärmten Polymermaterialmischung mittels einer Form (110) und
Abziehen der Vorform von einem zumindest teilweise die innere Kontur des Zitzengummis bestimmenden Element der Form, **dadurch gekennzeichnet, dass** das Abziehen erfolgt durch Einführen von unter Druck stehendem Fluid in den Schlauchbereich (100a) und gleichzeitigem Begrenzen einer durch den Fluiddruck hervorgerufenen radialen Ausdehnung des Schlauchbereichs auf einen festgelegten Bereich (152), wobei das Abziehen der Vorform (100) ferner umfasst: in Kontakt bringen eines Teils der Vorform mit einer der Kontur des Teils der Vorform angepassten Kontaktfläche (171), wobei die Kontaktfläche der Kontur der Vorform nachgebildet ist, und Ausüben einer Zugkraft auf die Vorform mittels der Kontaktfläche (171).

2. Verfahren nach Anspruch 1, wobei das Begrenzen der radialen Ausdehnung durch Anordnen einer Hülse erfolgt, die den Schlauchbereich zumindest teilweise mit einem spezifizierten Spalt umgibt.

3. Verfahren nach Anspruch 2, wobei die Kontaktfläche einen Teil der Innenfläche der Hülse bildet.

4. Verfahren nach einem der Ansprüche 1 bis 3, wobei die radiale Ausdehnung auf 20 mm oder weniger begrenzt wird.

5. Verfahren nach Anspruch 4, wobei die radiale Ausdehnung auf 0,5 mm oder mehr eingestellt wird.

6. Verfahren nach einem der Ansprüche 1 bis 5, wobei während des Einführens des Fluids zur Verbesserung der Dichtungseigenschaften zumindest ein Endbereich des Schlauchbereichs in radialer Richtung mechanisch fixiert wird.

7. Verfahren nach einem der Ansprüche 1 bis 6, wobei zumindest der Kopfbereich (100b) während der Einführung des Fluids von einer Greifereinheit (280) mit Kraft beaufschlagt wird.

8. Verfahren nach einem der Ansprüche 1 bis 7, wobei ferner zum Einführen des Fluids eine Düse mit Dichtfläche zum Endbereich des Schlauchbereichs bewegt und angedrückt wird.

9. Verfahren nach einem der Ansprüche 1 bis 8, das ferner nach dem Abziehen Ausheizen der Vorform des Zitzengummis zur Einstellung der Materialeigenschaften des Zitzengummis umfasst.

10. Verfahren nach einem der Ansprüche 1 bis 9, wobei bei der Ausdehnung des Schlaubereichs verdrängtes Gas über Gasauslässe abgeführt wird.

11. Verfahren nach Anspruch 10, wobei eine wirksame Fläche der Gasauslässe so angepasst wird, dass eine Ausstülpung des Materials der Vorform in die Gasauslässe hinein erfolgt, ohne eine irreversible Verformung des ausgestülpten Materials zu bewirken.

12. Verfahren nach einem der Ansprüche 1 bis 11, wobei die Polymermaterialmischung eine Siliconmischung ist.

13. Verfahren nach einem der Ansprüche 1 bis 12, wobei die Vorform eine Temperatur von 150°C oder mehr während des Abziehens aufweist.

14. Verfahren nach einem der Ansprüche 1 bis 13, das ferner umfasst: Steuern des Fluiddrucks und einer axialen Kraft so, dass ein vorgegebener Bereich eingehalten wird.

15. Verfahren nach Anspruch 14, das ferner umfasst: Prüfen mittels einer Steuereinrichtung, ob die Vorform erfolgreich abgezogen wurde und Wiederholen des Abziehvorgangs, wenn der vorhergehende Abziehvorgang nicht erfolgreich war.

16. Verfahren nach Anspruch 15, wobei beim Wiederholen zumindest der Fluiddruck erhöht wird.

17. Verfahren nach einem der Ansprüche 1 bis 16, wobei eine axiale Kraft auf den Schlauchbereich zum Stauchen zumindest des Schlauchbereichs ausgeübt wird, um das Ablösen des Materials der Vorform von dem Element der Form zu unterstützen.

18. Vorrichtung zum Abziehen einer Vorform (100) eines Zitzengummis, der einen Kopfbereich (100b) und einen Schlauchbereich (100a) aufweist und zumindest teilweise auf einem die innere Form des Zitzengummis bestimmenden Element (110) aufgebracht ist, wobei die Vorrichtung umfasst:
eine Abzieheinheit (170) mit einer mit der Vorform (100) zumindest teilweise in Kontakt zu bringenden Kontaktfläche (171),
eine Fluideinführeinrichtung (160), die zum Einführen eines unter Druck stehenden Fluids (161) in den Schlauchbereich (100a) ausgebildet ist, und
einer Begrenzungseinrichtung (150) zur Begrenzung der radialen Ausdehnung des Schlauchbereichs (100a) bei Einführung des Fluids, **dadurch gekennzeichnet, dass** die Kontaktfläche (171) der Kontur der Vorform nachgebildet ist, und dass ein Zugmittel zum Ausüben einer Zugkraft auf die Vorform über die Kontaktfläche vorgesehen ist.

19. Vorrichtung nach Anspruch 18, wobei die Begrenzungseinrichtung eine Hülse (254) aufweist, die den Schlauchbereich zumindest teilweise umschließt, um einen Spalt zwischen der Außenseite und einer Innenfläche der Hülse (254) zur Begrenzung der radialen Ausdehnung zu definieren.

20. Vorrichtung nach Anspruch 18 oder 19, wobei die Begrenzungseinrichtung (150) ausgebildet ist, um die radiale Ausdehnung auf 20 mm oder weniger zu begrenzen.

21. Vorrichtung nach Anspruch 19, wobei die Hülse (254) Gasauslässe (255) aufweist, die bei der radialen Ausdehnung das Auftreten von Gaseinschlüssen zwischen der Innenfläche der Hülse und Material des Schlauchbereichs im Wesentlichen verhindern.

22. Vorrichtung nach einem der Ansprüche 18 bis 21, wobei die Begrenzungseinrichtung (150) bei der radialen Ausdehnung des Schlauchbereichs (100a) eine mit diesem in Kontakt tretende Oberfläche mit einer die Adhäsion und/oder Friktion fördernden Oberflächeneigenschaft aufweist.

23. Vorrichtung nach einem der Ansprüche 18 bis 22, wobei die Begrenzungseinrichtung (150) ferner eine relativ zu dem Element axial bewegliche Düse zum Einführen des Fluids aufweist.

24. Vorrichtung nach Anspruch 23, wobei eine Anpresskraft der Düse beim Kontakt mit dem Schlauchbereich einstellbar ist.

25. Vorrichtung nach Anspruch 22, wobei die Oberfläche einen Teil der Kontaktfläche (171) bildet.

26. Vorrichtung nach Anspruch 18, wobei die Begrenzungseinrichtung (105) Begrenzungsflächen aufweist, die in Betriebsstellung zum Abziehen der Vorform der äußeren Kontur nachgebildet sind und zumindest im Schlauchbereich einen definierten Spalt zur Ausdehnung bilden.

27. Vorrichtung nach Anspruch 26, wobei die Begrenzungsflächen mehrere Flächenelemente aufweisen, die durch Greiferelemente in der Betriebposition zum Abziehen positionierbar sind.

28. Vorrichtung nach einem der Ansprüche 18 bis 27, wobei die Kontaktfläche (171) zumindest einen ersten Kontaktflächenbereich zur Kontaktierung eines Kopfbereichs der Vorform und einen zweiten Kontaktflächenbereich zur Kontaktierung eines Endbereichs der Vorform aufweist.

29. Vorrichtung nach Anspruch 28, wobei der erste Kontaktflächenbereich durch die Oberfläche von Backen einer ersten Greifereinrichtung (280) und der zweite Kontaktflächenbereich durch die Oberfläche von Backen einer zweiten Greifereinrichtung (275) gebildet sind.

30. Vorrichtung nach Anspruch 28 oder 29, wobei ein dritter Kontaktflächenbereich vorgesehen ist, der in Längsrichtung des Schlauchbereichs zwischen dem ersten und dem zweiten Kontaktflächenbereich angeordnet ist.

31. Vorrichtung nach Anspruch 19, wobei die Innenfläche der Hülse (254) zumindest teilweise der Kontur der abzuziehenden Vorform nachgebildet ist.

32. Vorrichtung nach einem der Ansprüche 18 bis 31, die ausgebildet ist, mehrere Vorformen gleichzeitig abzuziehen.

33. Vorrichtung nach einem der Ansprüche 18 bis 32, die ferner eine Steuereinheit aufweist, die ausgebildet ist, um den Fluiddruck und eine beim Abziehen ausgeübte Zugkraft in einem spezifizierten Bereich zu halten.

34. Vorrichtung nach Anspruch 33, wobei die Steuereinheit ferner ausgebildet ist, eine nicht abgezogene Vorform zu erkennen und eine spezifizierte Korrekturfunktion auszuführen.

35. Vorrichtung nach Anspruch 34, wobei die Korrekturfunktion eine Wiederholung des Abziehvorgangs beinhaltet.

36. Vorrichtung nach einem der Ansprüche 18 bis 35, die ferner ausgebildet ist, eine axiale Kraft auf den Schlauchbereich zur Stauchung zumindest des Schlauchbereichs auszuüben, um das Ablösen des Materials der Vorform von dem Element zu unterstützen.

37. Vorrichtung nach Anspruch 36, wobei die Abzieheinheit, die Fluideinführeinrichtung und die Begrenzungseinrichtung gemeinsam zur Ausübung der axialen Kraft bewegbar sind.

## Claims

1. Method for manufacturing a preform of a teat rubber with a head region (100b) and an adjoining tube region (100a), including
forming a preform (100) of the teat rubber from a heated polymer material mixture by means of a mould (110) and
removing the preform from an element of the mould that at least partially determines the inner contour of the teat rubber, **characterised in that** the removal is carried out by introducing pressurised fluid into the tube region (100a) and at the same time limiting a radial expansion of the tube region, caused by the fluid pressure, to a defined region (152), the removal of the preform (100) further including: bringing a part of the preform into contact with a contact face (171) adapted to the contour of the part of the preform, the contact face being modelled on the contour of the preform, and exerting a tensile force on the preform by means of the contact face (171).

2. Method according to claim 1, wherein the radial expansion is limited by arranging a sleeve which at least partially surrounds the tube region with a specified gap.

3. Method according to claim 2, wherein the contact face forms part of the inner face of the sleeve.

4. Method according to one of claims 1 to 3, wherein the radial expansion is limited to 20 mm or less.

5. Method according to claim 4, wherein the radial expansion is set to 0.5 mm or more.

6. Method according to one of claims 1 to 5, wherein during the introduction of the fluid, to improve the sealing properties, at least an end region of the tube region is mechanically fixed in the radial direction.

7. Method according to one of claims 1 to 6, wherein a gripper unit (280) applies force to at least the head region (100b) during the introduction of the fluid.

8. Method according to one of claims 1 to 7, wherein furthermore, for introducing the fluid, a nozzle with a sealing face is moved toward the end region of the tube region and pressed on.

9. Method according to one of claims 1 to 8, further including, after the removal, heating the preform of the teat rubber to adjust the material properties of the teat rubber.

10. Method according to one of claims 1 to 9, wherein during the expansion of the tube region displaced gas is discharged via gas outlets.

11. Method according to claim 10, wherein an effective area of the gas outlets is adapted in such a way that the material of the preform is bulged into the gas outlets without causing irreversible deformation of the bulged material.

12. Method according to one of claims 1 to 11, wherein the polymer material mixture is a silicone mixture.

13. Method according to one of claims 1 to 12, wherein the preform has a temperature of 150 °C or more during the removal.

14. Method according to one of claims 1 to 13, further including: controlling the fluid pressure and an axial force in such a way that a predefined range is adhered to.

15. Method according to claim 14, further including: checking by means of a control means whether the preform has been successfully removed and repeating the removal process if the preceding removal process was not successful.

16. Method according to claim 15, wherein at least the fluid pressure is increased during the repeating.

17. Method according to one of claims 1 to 16, wherein an axial force is exerted on the tube region for compressing at least the tube region in order to assist the detachment of the material of the preform from the element of the mould.

18. Device for removing a preform (100) of a teat rubber which has a head region (100b) and a tube region (100a) and is applied at least partially to an element (110) determining the inner shape of the teat rubber, the device comprising:
a removal unit (170) with a contact face (171) which is to be brought at least partially into contact with the preform (100),
a fluid introduction means (160) which is embodied for introducing a pressurised fluid (161) into the tube region (100a), and
a limiting means (150) for limiting the radial expansion of the tube region (100a) on introduction of the fluid, **characterised in that** the contact face (171) is modelled on the contour of the preform and **in that** a traction mechanism is provided for exerting a tensile force on the preform via the contact face.

19. Device according to claim 18, wherein the limiting means has a sleeve (254) which at least partially surrounds the tube region to define a gap between the exterior and an inner face of the sleeve (254) for limiting the radial expansion.

20. Device according to claim 18 or 19, wherein the limiting means (150) is embodied to limit the radial expansion to 20 mm or less.

21. Device according to claim 19, wherein the sleeve (254) has gas outlets (255) which substantially prevent the production of gas pockets between the inner face of the sleeve and material of the tube region during the radial expansion.

22. Device according to one of claims 18 to 21, wherein the limiting means (150) has, during the radial expansion of the tube region (100a), a surface which enters into contact with said tube region and has a surface property promoting adhesion and/or friction.

23. Device according to one of claims 18 to 22, wherein the limiting means (150) further has a nozzle, which is axially movable relative to the element, for introducing the fluid.

24. Device according to claim 23, wherein a press-on force of the nozzle is adjustable during contact with the tube region.

25. Device according to claim 22, wherein the surface forms part of the contact face (171).

26. Device according to claim 18, wherein the limiting means (105) has limiting faces which, in the operating position for removing the preform, are modelled on the outer contour and form, at least in the tube region, a defined gap for expansion.

27. Device according to claim 26, wherein the limiting faces have a plurality of face elements which can be positioned by gripper elements in the operating position for removal.

28. Device according to one of claims 18 to 27, wherein the contact face (171) has at least a first contact face region for contacting a head region of the preform and a second contact face region for contacting an end region of the preform.

29. Device according to claim 28, wherein the first contact face region is formed by the surface of jaws of a first gripper means (280) and the second contact face region is formed by the surface of jaws of a second gripper means (275).

30. Device according to claim 28 or 29, wherein a third contact face region is provided that is arranged, in the longitudinal direction of the tube region, between the first and the second contact face region.

31. Device according to claim 19, wherein the inner face of the sleeve (254) is modelled at least partially on the contour of the preform to be removed.

32. Device according to one of claims 18 to 31, embodied to remove a plurality of preforms simultaneously.

33. Device according to one of claims 18 to 32, further having a control unit which is embodied to keep the fluid pressure and a tensile force exerted during removal in a specified range.

34. Device according to claim 33, wherein the control unit is further embodied to detect a non-removed preform and to carry out a specified correction function.

35. Device according to claim 34, wherein the correction function includes repeating the removal process.

36. Device according to one of claims 18 to 35, further embodied to exert an axial force on the tube region for compressing at least the tube region in order to assist the detachment of the material of the preform from the element.

37. Device according to claim 36, wherein the removal unit, the fluid introduction means and the limiting means are jointly movable to exert the axial force.

## Revendications

1. Procédé pour fabriquer une ébauche d'un manchon trayeur avec une zone supérieure (100b) et une zone tubulaire (100a) qui fait suite à celle-ci, avec
la formation, à l'aide d'un moule (110), d'une ébauche (100) du manchon trayeur à partir d'un mélange de matériau polymère chauffé, et
l'extraction de l'ébauche hors de l'élément du moule qui définit au moins en partie le contour intérieur du manchon trayeur, **caractérisé en ce que** l'extraction se fait grâce à l'introduction d'un fluide sous pression dans la zone tubulaire (100a) et à la limitation simultanée d'une dilatation radiale de la zone tubulaire provoquée par la pression du fluide, à une zone fixée (152), l'extraction de l'ébauche (100) comprenant par ailleurs : la mise en contact d'une partie de l'ébauche avec une surface de contact (171) adaptée au contour de ladite partie de l'ébauche, la surface de contact étant la reproduction du contour de l'ébauche, et l'application d'une force de traction sur l'ébauche à l'aide de la surface de contact (171).

2. Procédé selon la revendication 1, selon lequel la limitation de la dilatation radiale se fait grâce à la disposition d'une douille qui entoure la zone tubulaire au moins en partie avec un interstice spécifié.

3. Procédé selon la revendication 2, selon lequel la surface de contact forme une partie de la surface intérieure de la douille.

4. Procédé selon l'une des revendications 1 à 3, selon lequel la dilatation radiale est limitée à 20 mm ou moins.

5. Procédé selon la revendication 4, selon lequel la dilatation radiale est réglée à 0,5 mm ou plus.

6. Procédé selon l'une des revendications 1 à 5, selon lequel pendant l'introduction du fluide, au moins une zone d'extrémité de la zone tubulaire est fixée mécaniquement dans le sens radial pour améliorer les propriétés d'étanchéité.

7. Procédé selon l'une des revendications 1 à 6, selon lequel la zone supérieure (100b), au moins, est soumise par une unité à mâchoires (280) à une force pendant l'introduction du fluide.

8. Procédé selon l'une des revendications 1 à 7, selon lequel pour l'introduction du fluide un injecteur avec une surface d'étanchéité est par ailleurs déplacé vers la zone d'extrémité de la zone tubulaire et appliqué contre celle-ci.

9. Procédé selon l'une des revendications 1 à 8, qui comprend par ailleurs, après l'extraction, l'étuvage de l'ébauche du manchon trayeur pour fixer les propriétés du matériau de celui-ci.

10. Procédé selon l'une des revendications 1 à 9, selon lequel le gaz refoulé lors de la dilatation de la zone tubulaire est évacué par des sorties de gaz.

11. Procédé selon la revendication 10, selon lequel une surface active des sorties de gaz est adaptée pour que le matériau de l'ébauche dépasse dans lesdites sorties de gaz sans provoquer de déformation irréversible du matériau dépassant ainsi.

12. Procédé selon l'une des revendications 1 à 11, selon lequel le mélange de matériau polymère est un mélange à base de silicone.

13. Procédé selon l'une des revendications 1 à 12, selon lequel l'ébauche présente une température de 150°C ou plus pendant l'extraction.

14. Procédé selon l'une des revendications 1 à 13, qui comprend par ailleurs : la commande de la pression du fluide et d'une force axiale de manière à respecter une plage prédéfinie.

15. Procédé selon la revendication 14, qui comprend par ailleurs : un contrôle, à l'aide d'un dispositif de commande, pour voir si l'ébauche a été extraite avec succès, et la répétition de l'opération d'extraction si l'opération d'extraction précédente a échoué.

16. Procédé selon la revendication 15, selon lequel on augmente au moins la pression de fluide lors de la répétition.

17. Procédé selon l'une des revendications 1 à 16, selon lequel une force axiale est exercée sur la zone tubulaire, pour écraser au moins ladite zone tubulaire afin de favoriser le détachement du matériau de l'ébauche par rapport à l'élément du moule.

18. Dispositif pour extraire une ébauche (100) d'un manchon trayeur qui présente une zone supérieure (100b) et une zone tubulaire (100a) et qui est appliqué au moins en partie sur un élément (110) définissant la forme intérieure du manchon trayeur, le dispositif comprenant :
une unité d'extraction (170) avec une surface de contact (171) à mettre au moins en partie en contact avec l'ébauche (100),
un dispositif d'introduction de fluide (160) qui est conçu pour introduire dans la zone tubulaire (100a) un fluide (161) sous pression,
un dispositif de limitation (150) pour limiter la dilatation radiale de la zone tubulaire (100a) lors de l'introduction du fluide, **caractérisé en ce que** la surface de contact (171) est la reproduction du contour de l'ébauche, et **en ce qu'**il est prévu un moyen de traction pour exercer une force de traction sur l'ébauche par l'intermédiaire de la surface de contact.

19. Dispositif selon la revendication 18, avec lequel le dispositif de limitation comporte une douille (254) qui entoure au moins en partie la zone tubulaire pour définir un interstice entre le côté extérieur et une face intérieure de la douille (254) afin de limiter la dilatation radiale.

20. Dispositif selon la revendication 18 ou 19, dans lequel le dispositif de limitation (150) est conçu pour limiter la dilatation radiale à 20 mm ou moins.

21. Dispositif selon la revendication 19, dans lequel la douille (254) présente des sorties de gaz (255) qui, lors de la dilatation radiale, empêchent globalement l'apparition de bulles de gaz entre la face intérieure de la douille et le matériau de la zone tubulaire.

22. Dispositif selon l'une des revendications 18 à 21, dans lequel le dispositif de limitation (150), lors de la dilatation radiale de la zone tubulaire (100a), présente une surface venant en contact avec celle-ci, avec une propriété de surface favorisant l'adhérence et/ou la friction.

23. Dispositif selon l'une des revendications 18 à 22, dans lequel le dispositif de limitation (150) comporte par ailleurs un injecteur mobile axialement par rapport à l'élément, pour l'introduction du fluide.

24. Dispositif selon la revendication 23, dans lequel une force d'application de l'injecteur lors du contact avec la zone tubulaire est réglable.

25. Dispositif selon la revendication 22, dans lequel la surface forme une partie de la surface de contact (171).

26. Dispositif selon la revendication 18, dans lequel le dispositif de limitation (105) présente des surfaces de limitation qui, dans la position de fonctionnement pour l'extraction de l'ébauche, sont la reproduction du contour extérieur et forment au moins dans la zone tubulaire un interstice défini, pour la dilatation.

27. Dispositif selon la revendication 26, dans lequel les surfaces de limitation présentent plusieurs éléments de surface qui sont aptes à être placés dans la position de fonctionnement par des éléments à mâchoire en vue de l'extraction.

28. Dispositif selon l'une des revendications 18 à 27, dans lequel la surface de contact (171) présente au moins une première zone de surface de contact pour venir en contact avec une zone supérieure de l'ébauche, et une deuxième zone de surface de contact pour venir en contact avec une zone d'extrémité de l'ébauche.

29. Dispositif selon la revendication 28, dans lequel la première zone de surface de contact est formée par la surface de mâchoires d'un premier dispositif à mâchoires (280), et la deuxième zone de surface de contact est formée par la surface de mâchoires d'un second dispositif à mâchoires (275).

30. Dispositif selon la revendication 28 ou 29, dans lequel il est prévu une troisième zone de surface de contact qui est disposée entre les première et deuxième zones de surface de contact, dans le sens longitudinal de la zone tubulaire.

31. Dispositif selon la revendication 19, dans lequel la surface intérieure de la douille (254) est la reproduction, au moins en partie, du contour de l'ébauche à extraire.

32. Dispositif selon l'une des revendications 18 à 31, qui est conçu pour extraire plusieurs ébauches en même temps.

33. Dispositif selon l'une des revendications 18 à 32, qui comporte par ailleurs une unité de commande qui est conçue pour maintenir la pression de fluide et une force de traction exercée lors de l'extraction dans une plage spécifiée.

34. Dispositif selon la revendication 33, dans lequel l'unité de commande est par ailleurs conçue pour détecter une ébauche non extraite et pour appliquer une fonction de correction spécifiée.

35. Dispositif selon la revendication 34, dans lequel la fonction de correction contient une répétition de l'opération d'extraction.

36. Dispositif selon l'une des revendications 18 à 35, qui est conçue par ailleurs pour exercer une force axiale sur la zone tubulaire pour écraser au moins ladite zone tubulaire, afin de favoriser le détachement du matériau de l'ébauche par rapport à l'élément du moule.

37. Dispositif selon la revendication 36, dans lequel l'unité d'extraction, le dispositif d'introduction de
fluide et le dispositif de limitation sont mobiles conjointement pour exercer la force axiale.
